# EUROPÄISCHE PATENTSCHRIFT

(11) **EP 1 563 384 B1**
(45) Veröffentlichungstag und Bekanntmachung des Hinweises auf die Patenterteilung: **10.12.2014**
(21) Anmeldenummer: 03795795.8
(22) Anmeldetag: 22.10.2003
(51) Int. Cl.: G06F 3/12

(54) **VERFAHREN UND SYSTEM ZUM ERZEUGEN EINER GRAFISCHEN BENUTZEROBERFLÄCHE ZUM BEDIENEN, ZUM KONFIGURIEREN UND/ODER ZUR DIAGNOSE EINES ELEKTROFOTOGRAFISCHEN DRUCKERS ODER KOPIERERS**
METHOD AND SYSTEM FOR CREATING A GRAPHIC USER INTERFACE FOR CONTROLLING, CONFIGURING AND/OR DIAGNOSING AN ELECTROPHOTOGRAPHIC COPYING OR PRINTING APPARATUS
PROCEDE ET SYSTEME POUR CREER UNE INTERFACE UTILISATEUR GRAPHIQUE POUR LA COMMANDE, LA CONFIGURATION ET/OU LE DIAGNOSTIC D'UN APPAREIL DE COPIE OU D'IMPRESSION ELECTROPHOTOGRAPHIQUE

(30) Priorität: 28.10.2002 DE 10250148
(43) Veröffentlichungstag der Anmeldung: 17.08.2005
(73) Patentinhaber: Océ Printing Systems GmbH & Co. KG, 85586 Poing (DE)
(72) Erfinder: BRUNNINGER, Martin, 85661 Forstinning (DE); KATHAN, Berthold, 81735 München (DE)
(74) Vertreter: Schaumburg, Thoenes, Thurn, Landskron, Eckert
(86) Internationale Anmeldenummer: PCT/EP2003/011708
(87) Internationale Veröffentlichungsnummer: WO 2004/038577

(56) Entgegenhaltungen:
- EP-A- 1 189 135
- EP-A- 1 202 160
- EP-A2- 0 843 230
- US-A- 5 412 779
- US-A- 5 960 204

## Beschreibung

Die Erfindung betrifft ein Verfahren und ein System zum Erzeugen einer grafischen Benutzeroberfläche für ein elektrofotografisches Druck- oder Kopiersystem. In einem Speicherbereich einer ersten Datenverarbeitungseinheit des Druck- oder Kopiersystems sind Daten zum Erzeugen einer grafischen Benutzeroberfläche gespeichert.

Bei bekannten Druckern oder Kopierern ist eine serielle Schnittstelle zum Anschluss eines Service- und Wartungscomputers vorgesehen, mit dem Diagnosearbeiten und Einstellarbeiten durchgeführt werden können. Einzelne Baugruppen des Druckers oder Kopierers haben eine eigene Datenschnittstelle, an die über einen Schnittstellenwandler der Service- und Wartungscomputer für Diagnose-, Konfigurations- und Wartungsarbeiten anschließbar ist. Die Diagnose und Einstellung dieser Baugruppen kann bei bekannten Druckern nur über die jeweilige Datenschnittstelle der Baugruppe erfolgen. Durch die relativ geringen Datenübertragungsraten dieser Datenschnittstellen mussten größer Datenmengen mit Hilfe von Wechseldatenträgern, wie z.B. Disketten, aus dem Drucker oder Kopierer ausgelesen werden. Zum Auswerten dieser Fehlerdaten, zum Diagnostizieren und Warten der Baugruppen mit eigener Datenschnittstelle und zur Diagnose des Druckers oder Kopierers über die serielle Schnittstelle sind unterschiedliche Programme erforderlich, die jeweils durch den Service- und Wartungscomputer einzeln aufgerufen und abgearbeitet werden. Die erforderlichen Programme sind auf dem Service- und Wartungscomputer installiert, wobei für einzelne Auslieferungsstände einzelner Baugruppen und des Druckers oder Kopierers unterschiedliche Programmversionen erforderlich sind, die jeweils als separates Programm auf einer Festplatte des Service- und Wartungscomputers gespeichert sind. Schon die Auswahl des korrekten Programms erfordert erhebliche Fachkenntnis.

Aus dem US-Patent 5,243,382 ist ein Steuersystem für einen Drucker oder Kopierer bekannt, bei dem ein tragbares Wartungsgerät an eine Wartungsschnittstelle anschließbar ist. Der Drucker oder Kopierer überträgt erste Daten mit Zustandsinformationen des Druckers oder Kopierers mit Hilfe einer Verbindung zwischen Wartungsgerät und dem Drucker oder Kopierer. Weiterhin können dem Wartungsgerät zweite Daten eingegeben werden, die Zustandsinformationen enthalten. Mindestens ein Paar von gespeicherten Steuerinformationen auf der Basis der ersten und zweiten Zustandsinformationen können durch das Wartungsgerät ausgegeben werden. Weiterhin ist aus dem US-Patent 5,243,382 bekannt, die gespeicherten Daten zu einer Datenverarbeitungsanlage zu übertragen.

Weiterhin ist aus dem Dokument EP 0 843 230 A2 ein System zum Fernwarten eines mit einem Netzwerk verbundenen Peripheriegerätes über das World Wide Web bekannt. Bei diesem System wird ein Java-Applet beim ersten Aufruf von einem Server zu einer Datenverarbeitungsanlage heruntergeladen und dort von einem Browserprogrammmodul für einen wiederholten Aufruf durch dasselbe HTML-Dokument zwischengespeichert. Mit Hilfe des HTML-Dokuments wird eine grafische Benutzeroberfläche erzeugt, wobei auch das HTML-Dokument zu der Datenverarbeitungsanlage übertragen wird. Aus dem Dokument DE 197 35 947 A1 ist ein Verfahren und eine Anordnung zur Durchführung von Überwachungs- und Managementfunktionen in Netzen mit überwachten Komponenten und aus dem Dokument US 5,926,631 A1 ist eine Datenübertragung über das Internet mit Hilfe von auf der Programmiersprache Java basierenden Programmmodulen bekannt.

Aufgabe der Erfindung ist es, ein Verfahren und ein System zum Erzeugen einer grafischen Benutzeroberfläche für ein elektrofotografisches Druck- oder Kopiersystem anzugeben, durch das eine an das jeweilige Druck- oder Kopiersystem angepasste Benutzeroberfläche einfach erzeugbar ist und zumindest eine Bedienfunktion und/oder Diagnosefunktion zum Bedienen bzw. zur Diagnose des Druck- oder Kopiersystems bereitgestellt wird.

Die Aufgabe wird durch ein Verfahren mit den Merkmalen das Patentanspruchs 1 gelöst. Vorteilhafte Weiterbildungen der Erfindung sind in den abhängigen Patentansprüchen angegeben.

Ein erster Aspekt der Erfindung betrifft ein Verfahren zum Laden von Programmdaten zum Bedienen und/oder zur Diagnose eines elektrofotografischen Druckers, oder Kopierers. Erste Daten werden in einem ersten Speicherbereich einer ersten Datenverarbeitungseinheit eines Druckers oder Kopierers gespeichert. Die ersten Daten werden von der ersten Datenverarbeitungseinheit zu einer zweiten Datenverarbeitungseinheit einer Bedieneinheit übertragen. Die ersten Daten enthalten zumindest Angaben über mindestens ein zum Erzeugen von Bedien- und/oder Diagnosefunktionen erforderliches Programmmodul. Mit Hilfe der zweiten Datenverarbeitungseinheit wird überprüft, ob zweite Daten, die das Programmmodul enthalten, in einem zweiten Speicherbereich der zweiten Datenverarbeitungseinheit enthalten sind. Bei nicht vorhandenen zweiten Daten im zweiten Speicherbereich werden die zweiten Daten aus einem dritten Speicherbereich der ersten Datenverarbeitungseinheit zur zweiten Datenverarbeitungseinheit übertragen. Anweisungen des Programmmoduls werden von der zweiten Datenverarbeitungseinheit abgearbeitet.

Durch dieses erfindungsgemäße Verfahren zum Laden von Programmdaten wird erreicht, dass zumindest die zweiten Daten in einer Bedieneinheit gespeichert werden können, wobei mit Hilfe der ersten Daten einfach überprüft werden kann, ob im zweiten Speicherbereich das benötigte Programmmodul enthalten ist. Nur dann, wenn das erforderliche Programmmodul nicht im zweiten Speicherbereich enthalten ist, werden die zweiten Daten, die das Programmmodul enthalten, von der ersten Datenverarbeitungseinheit zur zweiten Datenverarbeitungseinheit übertragen. Die erforderliche Übertragungszeit insbesondere zum Laden der zweiten Daten wird dadurch wesentlich verkürzt, vor allem dann, wenn zur Datenübertragung Datenleitungen mit einer geringen Datenübertragungsrate genutzt werden.

Ein zweiter Aspekt der Erfindung betrifft ein System zum Laden von Programmdaten zum Bedienen und/oder zur Diagnose eines elektrofotografischen Druckers oder Kopierers. Das System enthält eine erste Datenverarbeitungseinheit des Druckers, die mit einer zweiten Datenverarbeitungseinheit einer Bedieneinheit über eine Datenleitung verbunden ist. Von der ersten Datenverarbeitungseinheit zur zweiten Datenverarbeitungseinheit sind erste Daten übertragbar, die zumindest Angaben über mindestens ein zum Erzeugen von Bedien- und/oder Diagnosefunktionen erforderliches Programmmodul enthalten. Die zweite Datenverarbeitungseinheit überprüft, ob zweite Daten, die das Programmmodul enthalten, in einem zweiten Speicherbereich der zweiten Datenverarbeitungseinheit gespeichert sind. Bei nicht vorhandenen zweiten Daten im zweiten Speicherbereich werden die zweiten Daten von einem dritten Speicherbereich der ersten Datenverarbeitungseinheit zur zweiten Datenverarbeitungseinheit übertragen. Die zweite Datenverarbeitungseinheit führt Anweisungen des Programmmoduls aus. Dadurch wird erreicht, daß die zweiten Daten nicht vom Drucker oder Kopiersystem übertragen werden müssen, wenn sie bereits in einem Speicherbereich der Bedieneinheit gespeichert sind. Wartezeiten zum Laden der Daten sind verringert.

Ein dritter Aspekt der Erfindung betrifft ein Verfahren zum Erzeugen einer graphischen Benutzeroberfläche für ein elektrofotografisches Druck- oder Kopiersystem. In einem Speicherbereich einer ersten Datenverarbeitungseinheit des Druck- oder Kopiersystems werden erste Daten zum Erzeugen einer graphischen Benutzeroberfläche gespeichert. Die ersten Daten werden zu einer zweiten Datenverarbeitungseinheit einer Bedieneinheit übertragen, die über eine Datenleitung mit der ersten Datenverarbeitungseinheit verbunden ist. Die ersten Daten werden durch die zweite Datenverarbeitungseinheit verarbeitet. Die zweite Datenverarbeitungseinheit arbeitet ein Anzeigeprogrammmodul ab, das die ersten Daten verarbeitet. In einem zweiten Speicherbereich der ersten Datenverarbeitungseinheit sind , zweite Daten gespeichert, die zur zweiten Datenverarbeitungseinheit übertragen werden. Die zweiten Daten werden von der zweiten Datenverarbeitungseinheit verarbeitet, wobei zumindest eine Bedienfunktion und/oder Diagnosefunktion zum Bedienen bzw. zur Diagnose des Druck- oder Kopiersystems bereit gestellt wird.

Durch das Verfahren gemäß dem dritten Aspekt der Erfindung wird erreicht, dass eine grafische Benutzeroberfläche zum Bedienen und/oder zur Diagnose des Druck- oder Kopiersystems auf einer Bedieneinheit erzeugt wird, ohne dass eine Installation von Spezialsoftware und eine Anpassung von Programmmodulen erforderlich ist. Eine druck- oder kopiersystemspezifische Anpassung der Bedieneinheit kann somit entfallen. Auch ist eine Auswahl eines für das Druck- oder Kopiersystem angepaßtes Programm aus einer Vielzahl von Programmen ist nicht erforderlich.

Die zum Erzeugen der grafischen Benutzeroberfläche erforderlichen Daten sind im Druck- oder Kopiersystem selbst gespeichert. Diese Daten sind bereits an den Typ und den Ausgabestand des Druck- oder Kopiersystems bzw. von Baueinheiten des Druck- oder Kopiersystems angepasst, wodurch eine korrekte Bedienung, korrekte Konfiguration und/oder eine korrekte Diagnose des Druck- oder Kopiersystems sehr einfach möglich ist.

Ein vierter Aspekt der Erfindung betrifft ein System zum Erzeugen einer grafischen Benutzeroberfläche für ein elektrofotografisches Druck- oder Kopiersystem. Eine erste Datenverarbeitungseinheit des Druck- oder Kopiersystems enthält einen ersten Speicherbereich, in dem erste Daten zum Erzeugen einer grafischen Benutzeroberfläche gespeichert sind. Die ersten Daten werden zu einer zweiten Datenverarbeitungseinheit einer Bedieneinheit übertragen, wobei die zweite Datenverarbeitungseinheit über eine Datenleitung mit der ersten Datenverarbeitungseinheit verbunden ist. Die zweite Datenverarbeitungseinheit verarbeitet die ersten Daten mit Hilfe eines Anzeigeprogrammmoduls, das eine grafische Benutzeroberfläche erzeugt. In einem zweiten Speicherbereich der ersten Datenverarbeitungseinheit sind zweite Daten gespeichert, die Programmelemente enthalten. Die zweiten Daten werden über die Datenleitung zur zweiten Datenverarbeitungseinheit übertragen. Die zweite Datenverarbeitungseinheit verarbeitet die zweiten Daten und stellt zumindest eine Bedien- und/oder Diagnosefunktion zum Bedienen bzw. zur Diagnose des Druckoder Kopiersystems bereit.

Durch dieses erfindungsgemäße System wird erreicht, dass die Bedieneinheit keine speziell an das Druck- oder Kopiersystem angepasste Programmelemente und Programmmodule benötigt, um eine für das jeweilige Druck- oder Kopiersystem angepasste Benutzeroberfläche bzw. angepasste Bedienoberflächen auszugeben. Sowohl die Daten zum Erzeugen einer grafischen Benutzeroberfläche als auch Programmelemente zum Bedienen und/oder zur Diagnose des Druck- oder Kopiersystems sind in einem Speicherbereich des Druck- oder Kopiersystems gespeichert, wobei sowohl die grafische Benutzeroberfläche als auch die Programmelemente auf den Typ und/oder den Ausgabestand des Druck- oder Kopiersystems abgestimmt sind.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und/oder den Verfahren sowie derartige weitere Anwendungen der Erfindung, wie sie darin aufgezeigt sind, als übliches derzeitiges oder künftiges Fachwissen eines zuständigen Fachmannes angesehen werden. Die Figuren zeigen Ausführungsbeispiele der Erfindung, nämlich:
- Figur 1: ein Blockschaltbild eines Systems mit einem Drucker und einem Service- und Wartungscomputer gemäß einem ersten Ausführungsbeispiel der Erfindung;
- Figur 2: ein Blockschaltbild mit einer Detailansicht einer Ein- und Ausgabesteuerung des Druckers und des Service- und Wartungscomputers nach Figur 1;
- Figur 3: ein Blockschaltbild, das die Datenübertragung und Kommunikationsstruktur zwischen dem Service- und Wartungscomputer und dem Drucker nach Figur 1 zeigt;
- Figur 4: eine Anordnung eines Druckers und eines Service- und Wartungscomputers gemäß einem zweiten Ausführungsbeispiel der Erfindung;
- Figur 5: eine Anordnung des Druckers und des Service- und Wartungscomputers nach Figur 4, wobei der Service- und Wartungscomputer über eine Datenfernübertragungsverbindung mit dem Drucker verbunden ist;

- Figur 6: ein Blockschaltbild, in dem der Zugriff eines Anzeigeprogrammmoduls auf Programmelemente dargestellt ist;
- Figur 7: ein Blockschaltbild mit einer Datenverarbeitungseinheit eines Service- und Wartungscomputers und einer Druckersteuerung, wobei die Datenübertragung zum Übertragen von Anzeigedaten dargestellt ist;
- Figur 8: einen Service- und Wartungscomputer, der mit einem ersten und einem fünften Drucker verbunden ist;
- Figur 9: einen Service- und Wartungscomputer, der mit einem zweiten Drucker verbunden ist; und
- Figur 10: Programmdatenarchive zum Erzeugen einer grafischen Benutzeroberfläche zur Konfiguration und Diagnose.

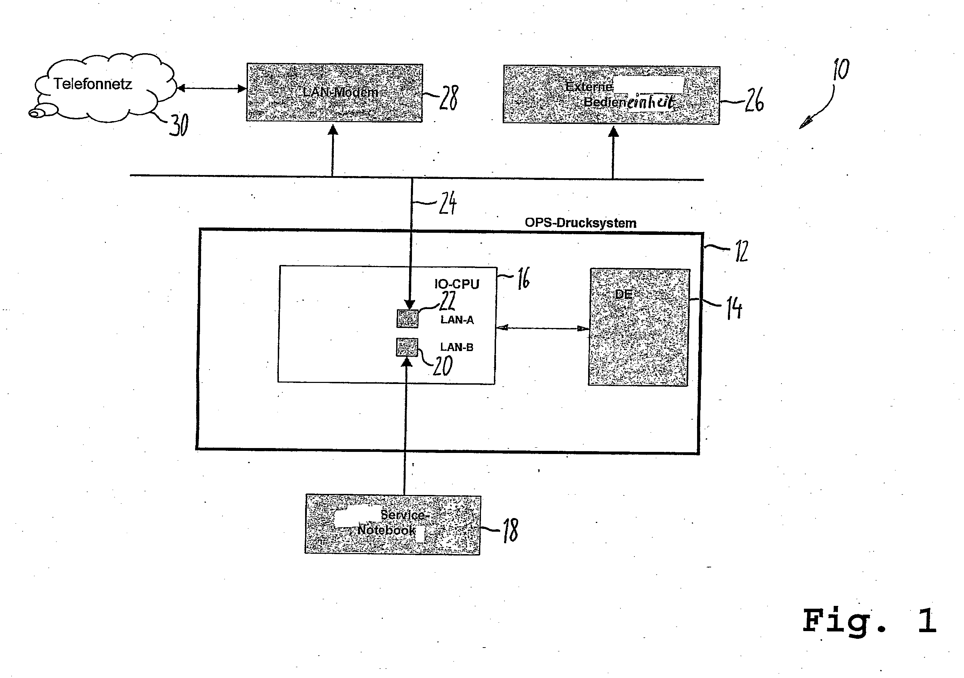

In Figur 1 ist ein Blockschaltbild eines Systems 10 zur Wartung, Konfiguration und Diagnose eines Druckers 12 mit Hilfe eines Service- und Wartungscomputers 18 dargestellt. Der Drucker 12 enthält eine Druckersteuerung 14 und eine Ein- und Ausgabesteuerung 16. Die Gerätesteuerung 14 enthält alle zur Steuerung, Wartung, Konfiguration und Fehleranalyse sowie zur Diagnose des Druckers 12 erforderlichen Informationen und Messwerte. Die Gerätesteuerung 14 ist mit der Ein- und Ausgabesteuerung 16 verbunden. Über eine erste Netzwerkverbindung ist ein erster Service- und Wartungscomputer 18 mit dem Drucker 12 verbindbar. Der Service- und Wartungscomputer 18 ist z.B. ein Service-Notebook, das ein Servicetechniker bei Serviceeinsätzen vor Ort am Drucker 12, z.B. bei einem Kunden, mit der Ein- und Ausgabesteuerung 16 des Druckers 12 verbindet. Die Verbindung erfolgt vorzugsweise mit Hilfe einer Netzwerkverbindung eines Local Area Network (LAN). Dazu verbindet der Servicetechniker das Service-Notebook 18 mit Hilfe eines Netzwerkkabels, eines sogenannten Patch-Kabels, mit einem ersten Netzwerkanschluss 20 der Ein- und Ausgabesteuerung 16. Weiterhin enthält die Ein- und Ausgabesteuerung 16 einen zweiten Netzwerkanschluss 22, durch den der Drucker 12 mit einem Netzwerk 24 verbunden ist. Über das Netzwerk 24 ist ein externes Bedienfeld 26 und ein LAN-Modem 28 mit dem Drucker 12 verbunden. Das LAN-Modem 28 ist mit einem Telefonnetz 30 verbunden, wobei über das LAN-Modem 28 eine Datenverbindung zu einem Servicezentrum des Druckerherstellers und zu einem Telefonanschluss eines Servicetechnikers herstellbar ist. In Figur 1 ist der Telefonanschluss des Servicetechnikers und das Servicezentrum, die jeweils mit dem Telefonnetz 30 verbunden sind, nicht dargestellt.

Mit Hilfe des externen Bedienfeldes 26 können Bedienpersonen Bedieneingaben durchführen. So können die Bedienpersonen z.B. Papierparameter eingeben, Druckbilder positionieren, Druckqualitäten festlegen und das Abarbeiten von Druckaufträgen koordinieren. Mit Hilfe des Service-Note-books 18 können sowohl die Bedienhandlungen durchgeführt werden, die Bedienpersonen über das externe Bedienfeld 26 ausführen können, als auch Einstellwerte und Parameter des Druckers 12 verändert und Speicherbereiche und Register der Gerätesteuerung 14 ausgegeben und mit neuen Daten beschrieben werden. In gleicher Weise, wie mit Hilfe des Service-Notebooks 18, stehen einem Servicetechniker beim Anschluss eines weiteren Service-Notebooks am Telefonanschluss und an einem mit dem Telefonnetz über in Modem verbundenen Service- und Wartungscomputer in einer Serviceleitstelle des Druckerherstellers jeweils Funktionen zur Diagnose und zur Einstellung von Druckerparametern zur Verfügung. Über das Telefonnetz 30 ist somit eine Fernwartung, Fernkonfiguration und Ferndiagnose des Druckers 12 möglich und mit Hilfe des mit dem Drucker 12 verbundenen Service-Notebooks 18 eine lokale Diagnose und Wartung.

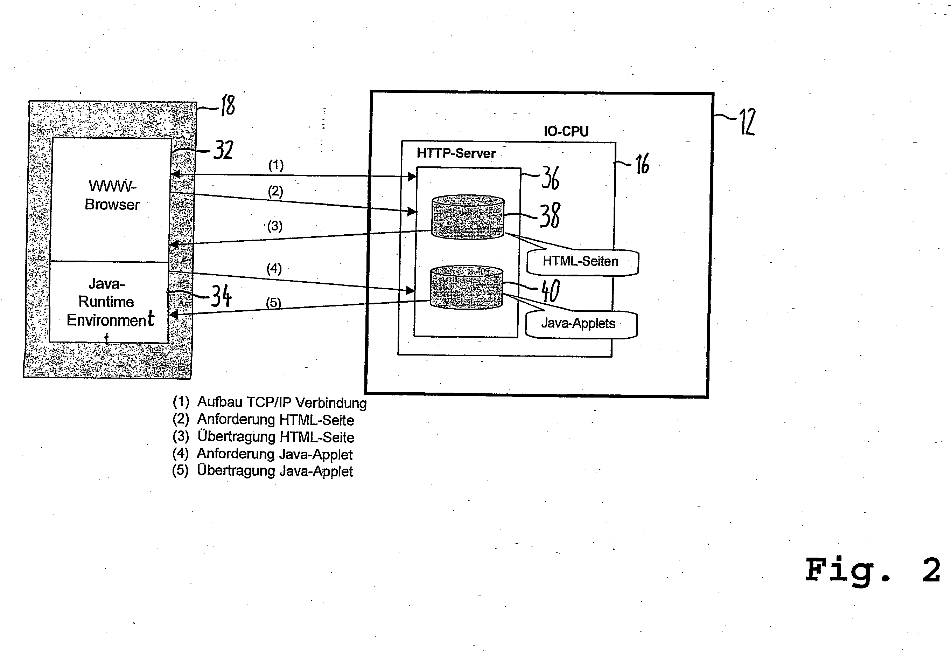

In Figur 2 ist ein Ausschnitt des Blockschaltbildes nach Figur 1 mit dem Service-Notebook 18 und der Ein- und Ausgabesteuerung 16 dargestellt. Gleiche Elemente haben gleiche Bezugszeichen. Das Service-Notebook 18 enthält neben einem Betriebssystem ein Anzeigeprogrammmodul 32, das auch als Browser-Programmmodul bezeichnet wird. Das Browser-Programmmodul 32 enthält eine sogenannte Java-Runtime-Programmumgebung, durch die es möglich ist, Programmelemente, die in der Programmiersprache Java erstellt worden sind, abzuarbeiten, wobei die durch diese Programmelemente erzeugten Daten mit Hilfe des Browser-Programmmoduls 32 ausgegeben werden.

Die Ein- und Ausgabesteuerung 16 enthält einen sogenannten HTTP-Server 36, der mindestens einen ersten Datenspeicherbereich 38 enthält, in dem Hypertexte und Elemente zum Erzeugen sogenannter Hypertext-Mark-up-Language-Seiten (HTML-Seiten) gespeichert sind, wobei die gespeicherten Daten vorzugsweise sogenannte Hypertexte zur Seitenbeschreibung enthalten. Mit Hilfe dieser HTML-Seiten wird eine grafische Benutzeroberfläche erzeugt, bei der, vorzugsweise über ein Menü, mehrere Bedienoberflächen auswählbar sind. Die Bedienoberflächen werden in einem in der grafischen Benutzeroberfläche vorgesehenen Abschnitt ausgegeben.

Weiterhin enthält der HTTP-Server 36 einen Speicherbereich 40, in dem Programmelemente gespeichert sind, die in der Programmiersprache Java erstellt worden sind. Ein solches Programmelement wird auch als Java-Applet bezeichnet. Die Programmdaten des Java-Applets, sowie Klassendaten, die zum Abarbeiten des Java-Applets benötigt werden, und Programmdaten von Programmteilen, die durch das Java-Applet aufgerufen werden, sind vorzugsweise in Archiven, sogenannten jar-Archiven gespeichert. Vorzugsweise sind Daten n einem Archiv gespeichert, die zum Erzeugen einer Funktion oder einer Gruppe von Funktionen erforderlich sind. Ferner sind bei anderen Ausführungsformen Speicherbereich 40 auch Java-Applikationen sowie Programmelemente gespeichert, die als ActiveX-Programmelemente bezeichnet werden. Im Speicherbereich 40 sind vorzugsweise mehrere Archive mit Java-Applets bzw. ActiveX-Elemente enthalten. Vorzugsweise ist ein Archiv mit Programmdaten zur Authentifizierung, ein Archiv mit Programmdaten zur Kommunikationssteuerung zwischen dem Service-Notebook 18 und der Ein- und Ausgabesteuerung 16 sowie weitere Archive mit Programmdaten zum Bereitstellen von Bedien-, Konfigurations- und Diagnosefunktionen enthalten.

Die Übertragung von Daten mit Einstellwerten und Druckerparametern zwischen Drucker 12 und Service-Notebook 18 erfolgt vorzugsweise mit Hilfe einer Remote Method Invocation(RMI)-Kommunikation. Mit Hilfe einer solchen RMI-Kommunikation ist es auch möglich, auf Objekte der Gerätesteuerung 14 und auf eine nicht dargestellte Datenbasis des Druckers 12, vorzugsweise auf eine Management Information Base (MIB) des Druckers 12, zuzugreifen. Mit Hilfe der Remote Method Invocation (RMI)-Kommunikationstechnik können Daten zwischen in der Programmiersprache Java definierten Objekten übertragen werden. Die RMI-Kommunikationstechnik ist ausführlich in den Dokumenten US 6,571,274 B1 sowie US 6,334,146 B1 beschrieben, deren Inhalte hiermit durch Bezugnahme in die vorliegende Beschreibung aufgenommen werden. Werden SNMP-Anweisungen als Daten mit Hilfe der RMI-Kommunikationstechnik über ein Wide Area Network (WAN) übertragen, so ist die Manipulation dieser SNMP-Anweisungen durch die relativ sichere Datenübertragung mit Hilfe der RMI-Kommunikation möglich, da mit Hilfe der RMI-Kommunikation Daten unmittelbar zwischen den in der Programmiersprache Java definierten Objekten übertragen werden. Die SNMP-Anweisungen werden somit als Nutzdaten übertragen und können von dritten unbefugten Benutzern nicht eingesehen werden.

Im Speicherbereich 40 können Programmdaten bzw. Archive mit Programmdaten zur Diagnose einer Papiereingabeeinheit, zur Diagnose einer Papierlaufsteuerung, zur Diagnose einer Papierausgabeeinheit oder zur Diagnose einer Druckeinheit enthalten sein. Weiterhin sind Archive mit Programmdaten zum Zugriff auf eine Ereignisregistrierung und Archive mit Programmdaten zum Zugriff auf einen Fehlerspeicher im Speicherbereich 40 enthalten.

Über die Netzwerkverbindung zwischen dem Service-Notebook 18 und dem Netzwerkanschluss 20 wird eine Verbindung mit Hilfe eines Transmission Control Protocol/Internet Protocol (TCP/IP) aufgebaut. Durch eine Voreinstellung im Browser-Programmmodul 32 wird eine HTML-Seite vom HTTP-Server 36 angefordert. Die Daten der HTML-Seite werden aus dem Speicherbereich 38 ausgelesen und zum Browser-Programmmodul 32 übertragen. Durch Abarbeiten des übertragenen Hypertextes der HTML-Seite wird beim HTTP-Server 36 ein Java-Applet angefordert. Der HTTP-Server 36 liest Daten aus dem Speicherbereich 40 aus, die Programmdaten des Java-Applets enthalten. Die Programmdaten des Java-Applets werden zum Service-Notebook 18 übertragen und von der Java-Runtime-Programmumgebung 34 abgearbeitet.

Im einfachsten Fall enthält die HTML-Seite bzw. der übertragene Hypertext nur die Anweisung zum Nachladen eines oder mehrerer Java-Applets. Die grafische Benutzeroberfläche, Anzeigeelemente und Bedienelemente sowie die Bedien-, Konfigurations- und Diagnosefunktion werden dann, wie bereits erwähnt, mit Hilfe der Java-Applet-Programmelemente realisiert.

Bei anderen Ausführungsbeispielen wird beim Aufbau der TCP/IP-Verbindung überprüft, ob der Servicetechniker mit dem Service-Notebook 18 autorisiert ist, Zugriff auf Daten des HTTP-Servers 36 zu erhalten. Das Java-Applet erzeugt die grafische Bedienoberfläche mit Hilfe des Browser-Programmmoduls 32 und baut mit Hilfe einer RMI-Kommunikation eine logische Verbindung zu einem RMI-Server 36 auf. Das Service-Notebook 18 ist bei der RMI-Kommunikation ein RMI-Client. Ferner sind die externe Bedieneinheit 26 und die über das Telefonnetz 30 angeschlossenen Servicecomputer RMI-Clients. Zum Übertragen von Massendaten, wie z.B. Fehlerdaten und sogenannten Trace-Daten, wird ein File-Transfer-Protokoll (FTP) zur Datenübertragung genutzt. Dazu ist in der Ein- und Ausgabesteuerung 16 ein spezieller FTP-Server vorgesehen, der jedoch nur zur Datenübertragung aktiviert wird und sonst aus Datenschutzgründen nicht aktiv ist.

Zum Aktivieren des FTP-Servers werden mit Hilfe der RMI-Kommunikation Daten übertragen, durch die die Ein- und Ausgabesteuerung 16 ein sogenanntes SNMP-Kommando erzeugt (SNMP = Simple Network Management Protocol). Zum Übertragen von Anweisungen zu Steuereinheiten des Druckers 12, das Auslesen von Parametern aus dem Drucker 12, wie Sensorwerten, Fehlerständen und Statusinformationen, werden ebenfalls SNMP-Kommandos genutzt, die mit Hilfe der RMI-Kommunikation zwischen dem Service-Notebook 18 und dem Drucker 12 erzeugt werden. Mit Hilfe von SNMP-Kommandos kann auch auf in der bereits erwähnten Management Information Base (MIB) enthaltene Variablen, Parameter, Kommandoregister und Statusregister zugegriffen werden, wobei jedem Element der Management Information Base ein Object Identifier (OID) als Adressierungsadresse zugeordnet ist. Die SNMP-Kommandos werden im RMI-Server mit Hilfe der übertragenen RMI-Kommandos und RMI-Daten erzeugt. Somit sind keine direkten Zugriffe mit SNMP-Kommandos von außen auf die MIB des Druckers 12 möglich. Dadurch wird sichergestellt, dass nicht berechtigte Personen und Steuereinheiten keinen Zugriff auf die Steuerungen 16 und die Datenbasis des Druckers 12 haben. Bei der Übertragung der Daten mit Hilfe des FTP-Protokolls werden die Daten jedoch direkt übertragen, wobei dann gesonderte Maßnahmen ergriffen werden, um einen unberechtigten Zugriff zu verhindern.

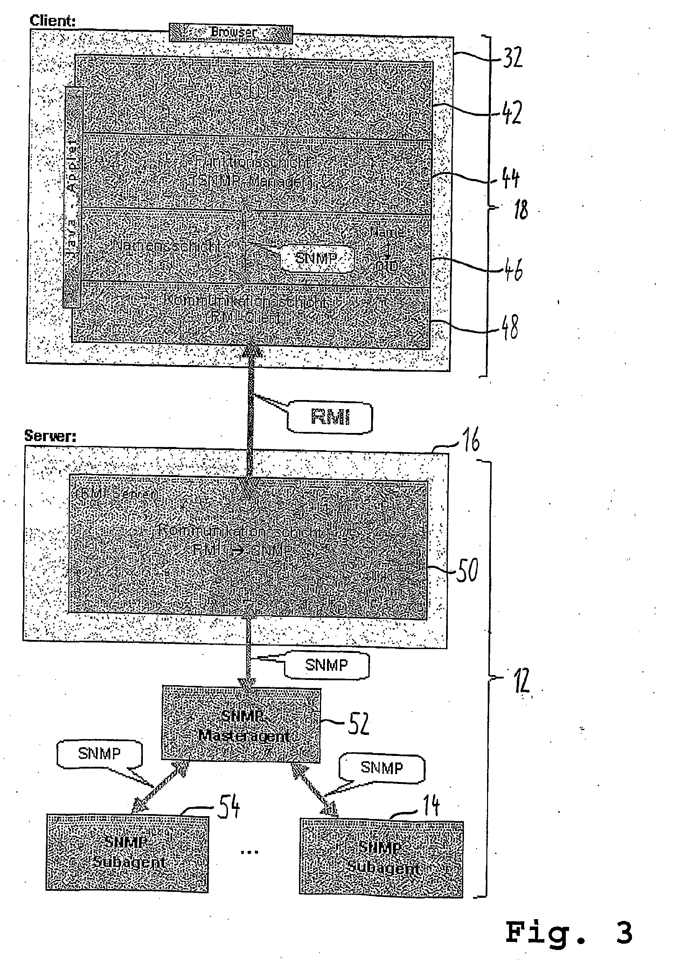

In Figur 3 ist ein Blockschaltbild dargestellt, in dem die RMI-/SNMP-Kommunikation zwischen dem Drucker 12 und dem Service-Notebook 18 dargestellt ist. Wie bereits im Zusammenhang mit Figur 2 erläutert, erfolgt die Kommunikation zwischen dem Service-Notebook 18 und dem Drucker 12 über eine Netzwerkverbindung mit Hilfe einer RMI-Kommunikation. Das Anzeigeprogramm 32 des Service-Notebooks 18 arbeitet ein Java-Applet 48 zum Erzeugen eines RMI-Clients einer RMI-Kommunikation ab. Das Java-Applet 48 ermittelt aus den mit Hilfe der RMI-Kommunikation übertragenen Daten die SNMP-Daten. Die SNMP-Daten enthalten wiederum Daten, z.B. mit Variablenwerten, Messwerten und Einstellwerten des Druckers 12, denen jeweils eine OID-Adresse zugeordnet ist. Mit Hilfe der OID-Adresse werden die Daten einzelner Variablen in einer Management Information Base (MIB) adressiert. Durch eine Programmfunktion 46 wird diesen Daten dann abhängig von der OID-Adresse ein Variablenname zugeordnet. Mit Hilfe der Variablennamen werden die übertragenen Daten durch eine Programmfunktion 44 angefordert und weiterverarbeitet.

Die Programmfunktion 44 dient als SNMP-Manager zum Ausführen und zum Erzeugen von SNMP-Kommandos sowie zum Zwischenspeichern von Daten. Mit Hilfe einer Programmfunktion 42 zum Erzeugen einer grafischen Benutzeroberfläche werden die mit Hilfe der Programmfunktion 44 ermittelten Daten und SNMP-Kommandos in Anzeigedaten umgewandelt, die auf einer Anzeigeeinheit des Service-Notebooks 18 ausgegeben werden.

Weiterhin können über die grafische Benutzeroberfläche Bedieneingaben und Eingaben von Einstellwerten erfolgen, die dann mit Hilfe der Programmfunktion 44 in SNMP-Kommandos umgewandelt werden. Entsprechend den in diesen Kommandos enthaltenen Variablennamen werden durch die Programmfunktion 46 Variablenadressen, d.h. OID-Adressen, zugeordnet, wobei die Daten zum Erzeugen der SNMP-Kommandos zusammen mit den Variablenadressen mit Hilfe der RMI-Kommunikation zum Drucker 12 übertragen werden. Die Daten zum Erzeugen der SNMP-Kommandos enthalten insbesondere RMI-Kommandos. Die Ein- und Ausgabesteuerung 16 des Druckers 12 enthält ein Programmmodul zum Erzeugen von SNMP-Kommandos aus den mit Hilfe der RMI-Kommunikation übertragenen Daten. Die SNMP-Kommandos enthalten dabei auch Daten mit Einstellwerten. Die SNMP-Kommandos umfassen insbesondere ein Get-Kommando zum Aufruf von Daten aus der Management Information Base, ein Set-Kommando zum Verändern von Daten in der Management Information Base und ein Trap-Kommando zur direkten Übertragung von Informationen zu einem SNMP-Agenten oder einem SNMP-Subagenten. Die SNMP-Agenten sind jeweils als Programmelemente in Steuereinheiten des Druckers 12, wie z.B. der Gerätesteuerung 14 enthalten. Die Programmdaten einer Programmfunktion 42, 44, 46 sind in jeweils einem Archiv enthalten und können so einzeln übertragen, abgearbeitet und gespeichert werden.

Die Ein- und Ausgabesteuereinheit 16 überträgt die SNMP-Kommandos zu einem SNMP-Masteragenten 52, der mit Hilfe der dem jeweiligen Kommando zugeordneten Adresse zur betreffenden Steuereinheit weiterleitet, in der ein Element mit dieser Adresse gespeichert ist. Dieses Weiterleiten des Kommandos zur jeweiligen Steuereinheit, von denen in Figur 3 die Steuereinheit 54 und die Steuereinheit 14 dargestellt sind, wird auch als Routen bezeichnet.

Vorzugsweise sind die SNMP-Agenten 52, 54, 14 sowie die mit Hilfe der SNMP-Agenten verwalteten Variablen und Daten derart hierarchisch organisiert, dass ihnen eine gemäß der Struktur der SNMP-Agenten entsprechende Adressstruktur zugeordnet ist, wodurch der Speicherort der jeweiligen Variable einfach mit Hilfe ihrer OID-Adresse einfach auffindbar ist. Mit Hilfe der SNMP-Kommandos können sowohl Diagnosefunktionen der einzelnen Steuereinheiten 14, 16, 52, 54 aufgerufen als auch Bedienhandlungen ausgeführt werden. Somit erfolgt die Datenübertragung zwischen der grafischen Benutzeroberfläche 42 und den Steuereinheiten 14, 16, 52, 54 des Druckers 12 mit Hilfe von SNMP-Kommandos, die zumindest zwischen dem Drucker 12 und dem Service-Notebook 18 mit Hilfe einer RMI-Kommunikation übertragen bzw. erzeugt werden.

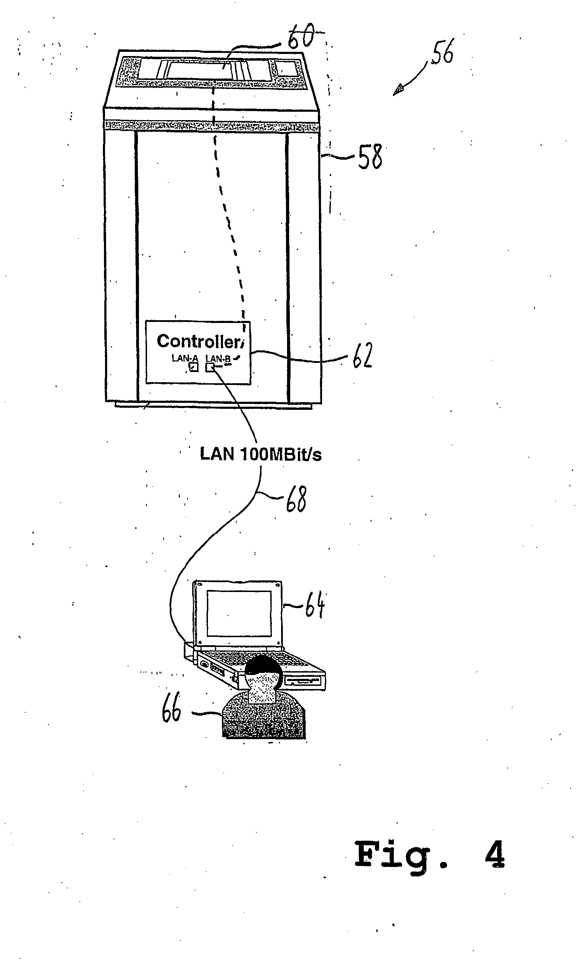

In Figur 4 ist ein System 56 zur Wartung, Konfiguration, Diagnose und Bedienen eines Druckers 58 dargestellt. Der Drucker 58 enthält ein internes Bedienfeld 60, das mit einer Ein- und Ausgabesteuerung 62 des Druckers 58 verbunden ist. Weiterhin ist ein Service-Notebook 64 eines Servicetechnikers 66 über eine Local Area Network-Verbindung (LAN) 68 mit der Ein- und Ausgabesteuerung 62 des Druckers 58 verbunden.

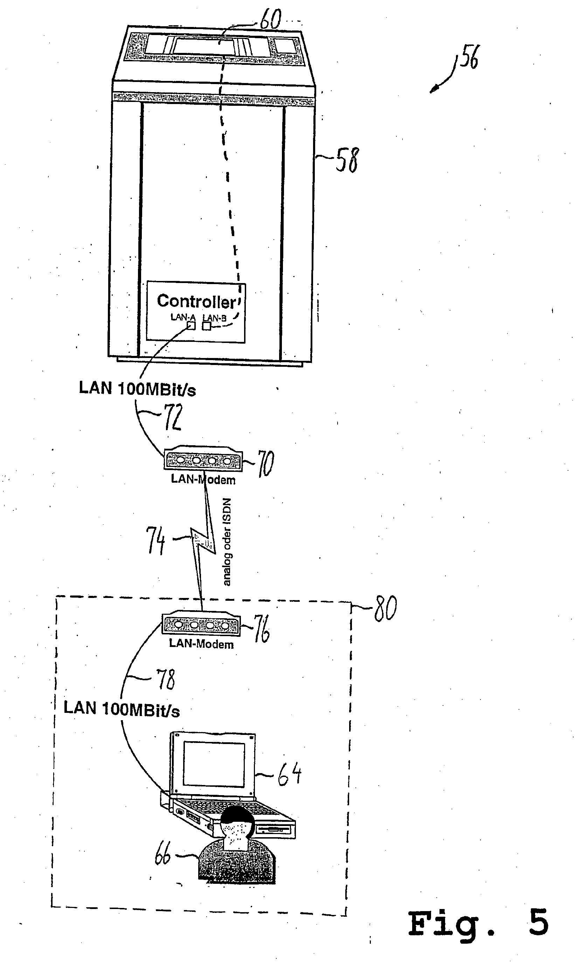

In Figur 5 ist das System 56 nach Figur 4 dargestellt, wobei ein LAN-Modem 70 über eine LAN-Netzwerkverbindung 72 mit der Ein- und Ausgabesteuerung 62 verbunden ist. Mit Hilfe des LAN-Modems 70 wird über ein Telefonnetz 74 eine sogenannte Punkt-zu-Punkt-Verbindung zu einem zweiten LAN-Modem 76 aufgebaut. Die Telefonverbindung 74 ist wahlweise eine analoge Telefonverbindung oder eine ISDN-Telefonverbindung. Ein Service-Notebook 64 des Servicetechnikers 66 ist über eine Netzwerkverbindung 78 mit dem LAN-Modem 76 verbunden. Das LAN-Modem 76, das Service-Notebook 64 und der Servicetechniker 66 befinden sich in einer Serviceleitstelle 80 des Druckerherstellers. Der Servicetechniker 66 kann mit Hilfe des Service-Notebooks 64 die gleichen Bedien-, Konfigurations-, Diagnose- und Einstellhandlungen durchführen, die er bei einer direkten Netzwerkverbindung 68 zwischen dem Drucker 58 und dem Service-Notebook 64 nach Figur 4 durchführen kann. Jedoch ist bei einer Verbindung über das Telefonnetz 74 die Datenübertragungsrate wesentlich geringer als bei einer direkten Netzwerkverbindung 68 zwischen dem Service-Notebook 64 und dem Drucker 58.

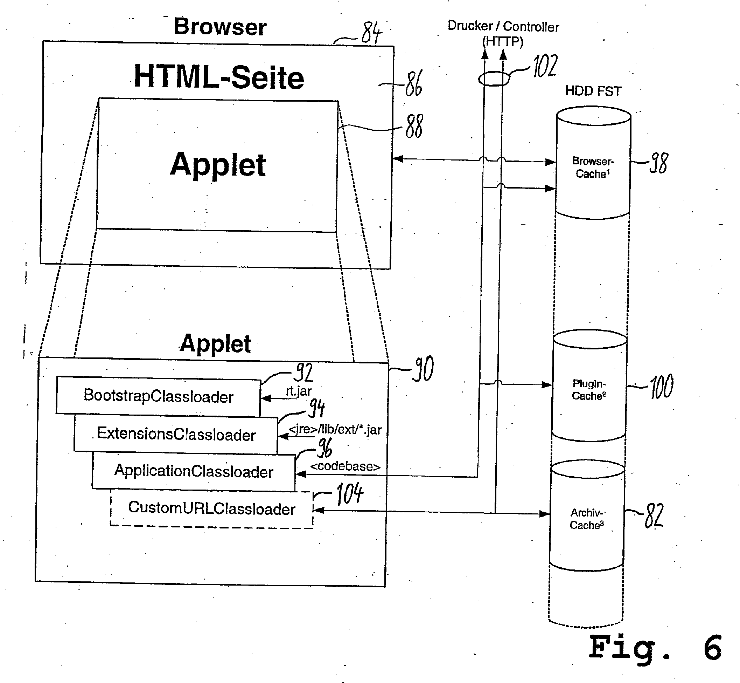

In Figur 6 ist ein Blockschaltbild zum Verwalten und Auffinden von in jar-Archiven enthaltenen Daten dargestellt. In Zusammenhang mit den Figuren 2 bis 5 wurde bereits erläutert, wie in jar-Archiven enthaltene Java-Applets und weitere Programmdaten mit Hilfe einer Java-Runtime-Programmumgebung des Browser-Programmmoduls 32 abgearbeitet werden. Bei dem Ausführungsbeispiel nach Figur 2 werden die Java-Applets mit Hilfe von jar-Archiven vom Speicherbereich 40 zum Service-Notebook 18 übertragen. Bei der in Figur 6 dargestellten Anordnung sind jar-Archive in einem Archiv-Zwischenspeicherbereich 82 des Service-Notebooks 64 speicherbar. Die Anordnung nach Figur 6 enthält ein Browser-Programmmodul 84 zum Ausgeben einer grafischen Benutzeroberfläche 86. Zumindest Teile der grafischen Benutzeroberfläche 86 werden durch Ausführen eines Java-Applets 88 erzeugt.

Das Browser-Programmmodul 84 arbeitet einen Hypertext einer HTML-Seite ab, in der ein Programmaufruf eines Java-Applets 88 enthalten ist. Nach dem Aufruf des Java-Applets 88 wird es mit Hilfe der Java-Runtime-Programmumgebung 90 abgearbeitet, die auch als Java-Runtime-Environment bezeichnet wird. Zum Abarbeiten des Java-Applets 88 werden sogenannte Klassen aus mindestens einem jar-Archiv geladen. Das Nachladen erfolgt mit Hilfe sogenannter Classloader. Für den Fall, daß der Classloader die Klasse nicht in einem voreingestellten Archiv findet, wird die Anforderung zum Nachladen einem hierarchisch untergeordneten Classloader übergeben, der dann in einem weiteren voreingestellten Verzeichnis nach der angeforderten Klasse sucht. Die Java-Runtime-Programmumgebung enthält einen BootstrapClassloader 92 zum Laden von Klassen, die in einer Grundkonfiguration der Java-Runtime-Programmumgebung 90 enthalten sind. Ein ExtensionClassloader 94 dient zum Laden von Klassen, die den Funktionsumfang der Grundklassen erweitern und deren Zugriffsrechte durch ein in der Java-Runtime-Programmumgebung 90 enthaltenes Rechtekonzept nicht eingeschränkt ist. Ferner ist ein ApplicationClassloader 96 vorgesehen, der zum Laden von applet- bzw. applikationsspezifischen Klassen dient.

Die Klassen, die mit dem ApplicationClassloader 96 geladen werden, wurden speziell für die Applikation bzw. für das Applet erstellt und sind nicht in einer Grundversion der Java-Runtime-Programmumgebung 90 mit enthalten. Der ApplicationClassloader 96 dient zum Laden der Archivdaten und Quelldaten aller im Java-Applet 88 enthaltenen Quellen und Archive. Weiterhin ist ein CustumURLClassloader 104 vorgesehen, der zusätzlich zu dem BootstrapClassloader 92, dem ExtensionClassloader 94 und dem ApplicationClassloader 96 erfindungsgemäß vorgesehen ist. Der CustumURLClassloader 104 dient zum Laden von applet- bzw. applikationsspezifischen Klassen und Programmdaten, die in einem voreinstellbaren Speicherbereich 82 gespeichert sind. Mit Hilfe des CustumURLClassloaders 104 ist es möglich, diese Klassen ohne die in den anderen Classloadern bestehenden Beschränkungen bei der Verwaltung der und dem Zugriff auf die Klassen aus beliebigen voreinstellbaren Speicherbereichen, z.B. aus Verzeichnissen 82, auszulesen.

Beim Zugriff auf eine vom CustumURLClassloader 104 verwalteten Klasse wird eine Anforderung dieser Klasse zuerst einem sogenannten BootstrapClassloader 92 zugeführt, der das voreingestellte Archiv nach der Klasse durchsucht. Ist die gesuchte Klasse nicht im voreingestellten Archiv enthalten, so wird anschließend ein weiteres Archiv mit einem ExtensionsClassloader 94 nach der Klasse durchsucht. Ist die Klasse auch in diesem Archiv nicht enthalten, so wird nachfolgend ein Speicherbereich durch einen ApplicationClassloader 96 nach der angeforderten Klasse durchsucht. Der ApplicationClassloader 96 hat sowohl Zugriff auf einen Browser-Zwischenspeicher 98 und einen PlugIn-Zwischenspeicher 100.

Sowohl der Archiv-Zwischenspeicher 82, der Browser-Zwischenspeicher 98 und der PlugIn-Zwischenspeicher 100 sind in einem Festplattenspeicher einer Datenverarbeitungseinheit enthalten, wobei die Datenverarbeitungseinheit als Bedieneinheit und als Service- und Wartungscomputer des Druckers dient, mit dem eine Datenverarbeitungseinheit des Druckers über eine Netzwerkverbindung 102 verbunden ist. Der Service- und Wartungscomputer enthält auch das Browser-Programmmodul 84 mit der Java-Runtime-Programmumgebung 90. Sowohl im Browser-Zwischenspeicher 98 als auch im PlugIn-Zwischenspeicher 100 sind Daten, Klassen, Archive und Java-Applets zwischenspeicherbar, die von einem über das Netzwerk 102 angeschlossenen Drucker zum Service- und Wartungscomputer übertragen werden.

Der ApplicationClassloader 96 hat, wie bereits erwähnt, Zugriff auf den Browser-Zwischenspeicher 98 und den PlugIn-Zwischenspeicher 100. Jedoch werden die Daten, die vom Drucker über das Netzwerk 102 übertragen werden, im Browser-Zwischenspeicher 98 und im PlugIn-Zwischenspeicher 100 unter Bezug auf die Netzwerkadresse des Druckers gespeichert, von dem sie übertragen worden sind. Weiterhin werden die im Browser-Zwischenspeicher 98 und im PlugIn-Zwischenspeicher 100 gespeicherten Daten nach einem voreingestellten Zeitraum gelöscht. Bei einer Speicherung des aufgerufenen Java-Applets im Browser-Zwischenspeicher 98 oder im PlugIn-Zwischenspeicher 100 müssen identische Archive, die die angeforderte Klasse enthalten, bei einer Änderung der Netzwerkadresse des Druckers, z.B. bei einer Verbindung des Service- und Wartungscomputers über das Netzwerk 102 mit einem baugleichen zweiten Drucker, von diesem zweiten Drucker nochmals zum Service- und Wartungscomputer übertragen werden.

Sowohl die Übertragung eines identischen Archivs als auch das Zwischenspeichern des Archivs unter Bezug auf eine zweite Netzwerkadresse im Browser-Zwischenspeicher 98 oder im PlugIn-Zwischenspeicher 100 ist zeitaufwendig und speicherplatzaufwendig. Insbesondere dann, wenn über das Netzwerk 102 nur eine Datenübertragung mit geringer Datenübertragungsrate möglich ist. Wenn z.B. zwischen dem Service- und Wartungscomputer und dem Drucker ein Telefonnetz, ähnlich dem Telefonnetz 74 nach Figur 5, vorgesehen ist, kann die Datenübertragung mehrere Minuten und bei speicherintensiven Archiven bis zu mehreren Stunden dauern. Wird beim Durchsuchen der Zwischenspeicher 98 und 100 durch den ApplicationClassloader 96 das Archiv mit der angeforderten Klasse nicht gefunden, so wird erfindungsgemäß ein CustomURLClassloader 104 aufgerufen, dem der Archiv-Zwischenspeicher 82 zugeordnet ist.

In dem Archiv-Zwischenspeicher 82 werden die Programmdaten unabhängig von der Netzwerkadresse des Druckers gespeichert, von dem sie übertragen worden sind. Der Archiv-Zwischenspeicher 82 kann auch den Speicherbereich einer CD-ROM umfassen, auf der eine Vielzahl Archive verschiedenartiger Drucker und unterschiedlicher Versionen gleicher Druckertypen gespeichert sind. Alternativ oder zusätzlich sind auf der Festplatte eine Vielzahl von Archiven mit Klassen, Java-Applets und oder Java-Applikationen zum Bedienen und zur Diagnose verschiedener Drucker gespeichert. Beim Aufruf des CustomURLClassloader 104 wird der Archiv-Zwischenspeicher 82 nach dem Archiv mit der durch das Browser-Programmmodul 84 aufgerufenen Klasse durchsucht. Ist das jeweilige Archiv im Archiv-Zwischenspeicher 82 gespeichert, so wird das Archiv aus diesem Archiv-Zwischenspeicher 82 ausgelesen und zur Java-Runtime-Programmumgebung 90 übertragen, die zusammen mit dem Browser-Programmmodul 84 das Archiv öffnet und die benötigten Daten, d.h. die angeforderten Klassendaten, ermittelt. Mit diesen Klassendaten kann das ausgeführte Java-Applet 88 benötigte Bedien- und/oder Diagnosefunktionen in der grafischen Benutzeroberfläche 86 zur Diagnose, Konfiguration, bzw. Bedienen des Druckers zur Verfügung stellen.

Ermittelt der CustomURLClassloader 104 jedoch, dass kein Archiv mit den Klassendaten im Archiv-Zwischenspeicher 82 enthalten sind, so wird das Archiv vom über das Netzwerk 102 angeschlossenen Drucker angefordert und von diesem zur Java-Runtime-Programmumgebung 90 des Service- und Wartungscomputers übertragen, wobei das Archiv nach dem Übertragen im Archiv-Zwischenspeicher 82 gespeichert wird. Bei einer erneuten Verbindung mit einem Drucker, bei dem das selbe Archiv benötigt wird, wird das Archiv dann aus dem Archiv-Zwischenspeicher 82 durch den CustomURLClassloader 104 ausgelesen und eine angeforderte Klasse oder ein Java-Applet von der Java-Runtime-Programmumgebung 90 abgearbeitet. Ein erneutes Übertragen des Archivs vom angeschlossenen Drucker ist dann nicht erforderlich, auch dann nicht, wenn der Drucker eine andere Netzwerkadresse hat.

Die Archive enthalten vorzugsweise Programmdaten von Java-Applets oder von Teilen eines Java-Applets, Klassendaten oder andere Daten. Diese Archive enthalten eine Versionsinformation des Archivs und sind signiert, um eine Manipulation der Archivdaten und dadurch eine Manipulation des Druckers und der Bedieneinheit zu verhindern.

Werden bei einer vorhandenen Netzwerkverbindung 102 zwischen dem Drucker und dem Service- und Wartungscomputer keine Daten bzw. nur eine geringe Datenmenge übertragen, so kann der CustomURLClassloader 104 weitere aktuell nicht benötigte Archive vom Drucker anfordern und im Archiv-Zwischenspeicher 82 speichern, die im Drucker gespeichert sind und im Archiv-Zwischenspeicher 82 noch nicht enthalten sind. Vorzugsweise werden Archive angefordert, deren Bezeichnungen in dem Hypertext der HTML-Seite 86 oder in einem bereits ausgeführten Java-Applet 88 enthalten sind.

Vorzugsweise wird zuerst ein jar-Archiv vom Drucker oder aus dem Archiv-Zwischenspeicher 82 vom Browser-Programmmodul 84 geladen und abgearbeitet, das einen Ur-Lader enthält, mit dem weitere Klassen und Programmdaten gezielt nachgeladen werden, die zum Erzeugen der grafischen Benutzeroberfläche 86 benötigt werden. Anschließend wird ein jar-Archiv mit einer Authentifizierungsprozedur zum Authentifizieren der Datenverarbeitungsanlage durch den Drucker geladen. Nachfolgend wird ein jar-Archiv mit Java-Applets zur Kommunikation zwischen dem Drucker und dem Service- und Wartungscomputer geladen. Anschließend wird ein jar-Archiv mit Daten zum Erzeugen von Grundfunktionen der grafischen Benutzeroberfläche 86 geladen und ausgeführt.

Nach Aufruf einzelner Diagnose- und Bedienfunktionen über die grafische Benutzeroberfläche 86 werden dann zum Bereitstellen der Diagnose bzw. der Bedienfunktion erforderliche jar-Archive vom Archiv-Zwischenspeicher 82 oder vom Drucker nachgeladen. Vorzugsweise enthält der Hypertext der HTML-Seite oder ein jar-Archiv, das vom Drucker zum Service- und Wartungscomputer übertragen worden ist, die Bezeichnungen aller für mögliche Bedien- und Diagnosefunktionen erforderlichen jar-Archive. Alternativ sind diese Daten im Ur-Lader enthalten. Vorzugsweise enthält ein Java-Applet alle zum Bereitstellen der Bedien- bzw. Diagnosefunktion erforderlichen Programmschritte, um Abhängigkeiten zwischen einzelnen Archiven zu vermeiden. Dadurch wird ein zeitaufwendiges Nachladen weiterer jar-Archive vermieden, die an sich nicht oder noch nicht benötigt werden.

Bei anderen Ausführungsbeispielen werden Informationen über den Aufbau und Inhalt der grafischen Benutzeroberfläche 86 im Drucker gespeichert, insbesondere über den Aufbau eines Menübaums, den Inhalt von Listen und Ausgabefeldern. Diese gespeicherten Informationen werden beim erneuten Erzeugen einer grafischen Benutzeroberfläche 86 zur Beschleunigung des Aufbaus der grafischen Benutzeroberfläche 86 genutzt, indem vorerst nur die gespeicherten Informationen vom Drucker zu dem Service- und Wartungscomputer oder zu einer Bedieneinheit übertragen werden. So kann z.B. bei einem erneuten Serviceeinsatz auf diese im Drucker gespeicherten Informationen zurückgegriffen und eine grafische Benutzeroberfläche 86 mit den gespeicherten Informationen aufgebaut werden.

Auf das Laden einzelner jar-Archive aus dem Zwischenspeicher 82 und aus dem Drucker kann bis zu einem Zeitpunkt verzichtet werden, zu dem die jeweilige Funktion dann konkret benötigt wird, oder gegebenenfalls ganz, wenn die entsprechende Funktion bei der jeweiligen Bedienung und/oder Diagnose des Druckers nicht benötigt wird. Vorzugsweise werden beim Speichern der Informationen zusätzlich Versionsdaten gespeichert, die es ermöglichen, die Aktualität der gespeicherten Information zu ermitteln. Die Bedien-, Konfigurations- und Diagnosefunktionen betreffen insbesondere Parametereinstellungen des Druckers, das Einstellen von Fehlergrenzwerten, das Einstellen von Spannungen zwischen einzelnen Bauteilen einer Bilderzeugungseinheit des Druckers, Statuseinstellungen des Druckers, Lichtschrankentestroutinen, Motorstartroutinen und Ventiltestroutinen.

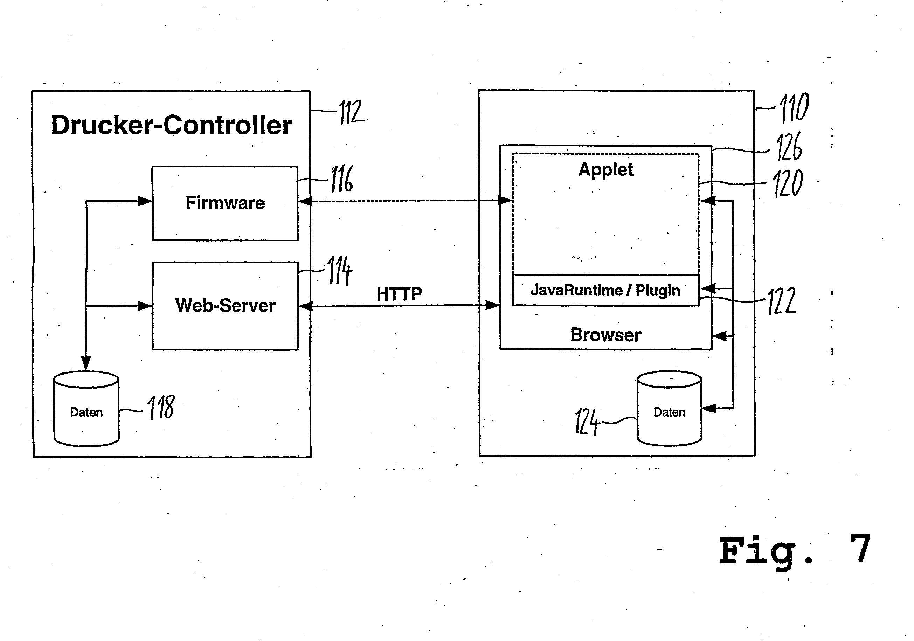

In Figur 7 ist in Blockschaltbild mit einer Datenverarbeitungseinheit 110 und einer Druckersteuerung 112 dargestellt, bei dem Elemente zur Datenübertragung zwischen der Druckersteuerung 112 und der Datenverarbeitungseinheit 110 dargestellt sind. Die Datenverarbeitungseinheit 110 ist beilspielsweise ein Service-Notebook oder eine Bedienenheit des Druckers. Die Druckersteuerung 112 enthält einen Web-Server 114, ähnlich dem HTTP-Server 36 nach Figur 2. Weiterhin enthält die Druckersteuerung 112 eine Firmware 116. Durch Abarbeiten der Firmware 116 durch die Druckersteuerung 112 wird zumindest ein Teil der Baueinheiten des Druckers gesteuert sowie ein RMI-Server zur RMI-Kommunikation zwischen Druckersteuerung 112 und Datenverarbeitungsanlage 110 erzeugt. Weiterhin werden mit Hilfe der Firmware 116 Messdaten und Einstelldaten des Druckers ermittelt. Die Messdaten,und Einstelldaten sind in einem Speicherbereich 118 der Druckersteuerung 112 oder in Speicherbereichen nicht dargestellter Steuereinheiten der Druckersteuerung 112 enthalten. Die Firmware liest diese Messdaten aus dem Speicherbereich 118 und/oder aus den Steuereinheiten aus und stellt diese Daten mit Hilfe des RMI-Servers zum Abruf durch die Datenverarbeitungsanlage 110 zur Verfügung. Mit Hilfe eines Browser-Programmmoduls 120 erzeugt die Datenverarbeitungseinheit 110 eine grafische Benutzeroberfläche, durch die Daten, insbesondere Meß- und Einstellwerte sowie Betriebszustände und Fehlerdaten anzeigbar sind.

Das Browser-Programmmodul 120 enthält eine mit Hilfe einer PlugIn-Prögrammmodul-Programmumgebung 122 bereitgestellte Java-Runtime-Programmumgebung. Mit Hilfe der Programmumgebungen 122 führt das Browser-Programmmodul 120 Programmelemente aus, wie z.B. Java-Applets. Abzuarbeitende Daten, Klassendaten sowie die Programmdaten mehrerer Applets sind in Archiven in einem Speicherbereich 124 der Datenverarbeitungseinheit 110 enthalten. Der Speicherbereich 124 umfasst vorzugsweise einen Browser-Zwischenspeicher, einen PlugIn-Zwischenspeicher und einen Archiv-Zwischenspeicher, ähnlich den Zwischenspeichern nach Figur 6. Die Datenübertragung zwischen dem Web-Server 114 und dem Browser-Programmmodul 122 erfolgt vorzugsweise mit einem Hypertext-Transferprotokoll. Das Übertragen von Messdaten und Einstellwerten des Druckers zu einem vom Browser-Programm 120 abgearbeiteten Java-Applet 126 erfolgt mit Hilfe einer RMI-Kommunikation zwischen dem Java-Applet 120 und dem RMI-Server, der durch die Abarbeitung der Firmware 116 erzeugt wird. Das Java-Applet 126 stellt Funktionen zur Konfiguration und Diagnose der Druckersteuerung 112 und des Druckers zur Verfügung, in dem die Druckersteuerung 112 enthalten ist.

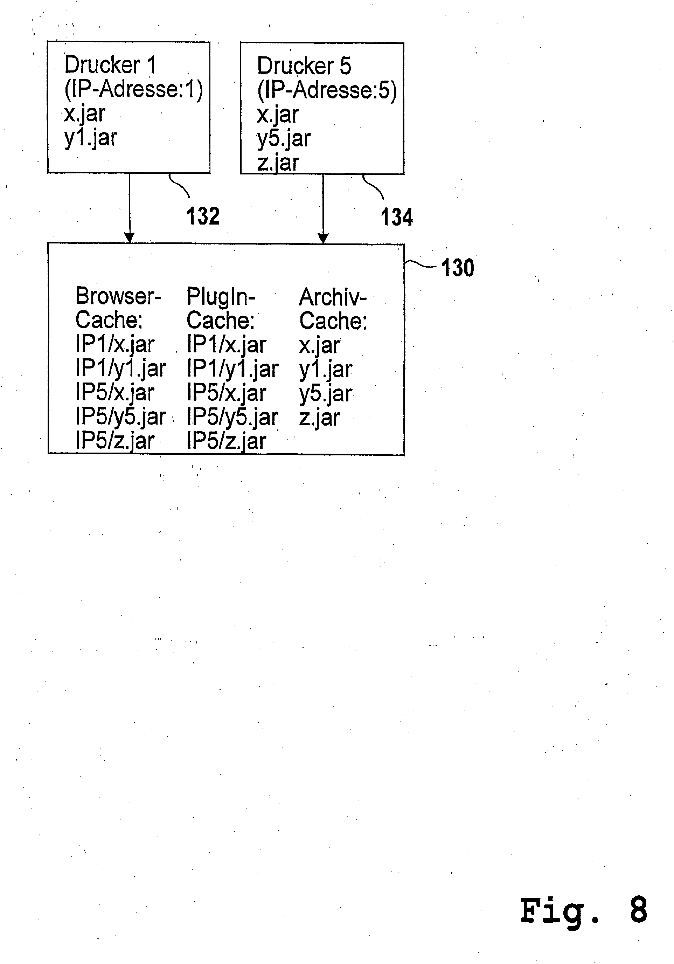

In Figur 8 ist jeweils der Speicherinhalt des Browser-Zwischenspeichers 98, des PlugIn-Zwischenspeichers 100 und des Archiv-Zwischenspeichers 82 nach Figur 6 dargestellt. Ein Service- und Wartungscomputer 130 ist mit einem ersten Drucker 132 und einem fünften Drucker 134 über jeweils eine Datenverbindung verbunden. Von den Druckern 132, 134 werden jeweils jar-Archive zum Service- und Wartungscomputer übertragen, um eine grafische Benutzeroberfläche sowie Bedien-, Konfigurations-, Diagnose- und Wartungsfunktionen bereitzustellen, wie in Zusammenhang mit Figur 6 und Figur 7 beschrieben. Vom Drucker 1 wird eine Datei "x.jar" und eine Datei "y1.jar" zum Service- und Wartungscomputer 130 übertragen. Der Service- und Wartungscomputer 130 ist so konfiguriert, dass die übertragenen Dateien sowohl im Browser-Zwischenspeicher, im PlugIn-Zwischenspeicher und im Archiv-Zwischenspeicher gespeichert werden. Im Browser-Zwischenspeicher und im PlugIn-Zwischenspeicher wird sowohl die Datei "x.jar" als auch die Datei "y1.jar" unter Angabe der Netzwerkadresse IP1 des Druckers 1 gespeichert. Im Archiv-Zwischenspeicher wird die Datei "x.jar" und die Datei "y1.jar" ohne Angabe einer Netzwerkadresse gespeichert. Mit Hilfe der Verbindung zwischen dem Drucker 134 und dem Service- und Wartungscomputer 130 wird die Datei "x.jar", "y5.jar" und "z.jar" zum Service- und Wartungscomputer 130 übertragen, wobei die Dateien "x.jar", "y5.jar" und "z.jar" unter Angabe der IP-Adresse IP5 im Browser-Zwischenspeicher und im PlugIn-Zwischenspeicher gespeichert werden. Die Datei "x.jar", die im Drucker 134 enthalten ist, und die Datei "x.jar", die im Drucker 152 enthalten ist, sind identisch. Im Archiv-Zwischenspeicher des Service- und Wartungscomputers 130 werden nur die Dateien "y5.jar" und "z.jar" ohne Angabe einer Netzwerkadresse gespeichert. Ist nur der Archiv-Zwischenspeicher als einziger Zwischenspeicher zum Zwischenspeichern der jar-Archive vorgesehen, so muss die Datei "x.jar" nur einmal entweder vom Drucker 132 oder vom Drucker 134 zum Service- und Wartungscomputer 130 übertragen werden.

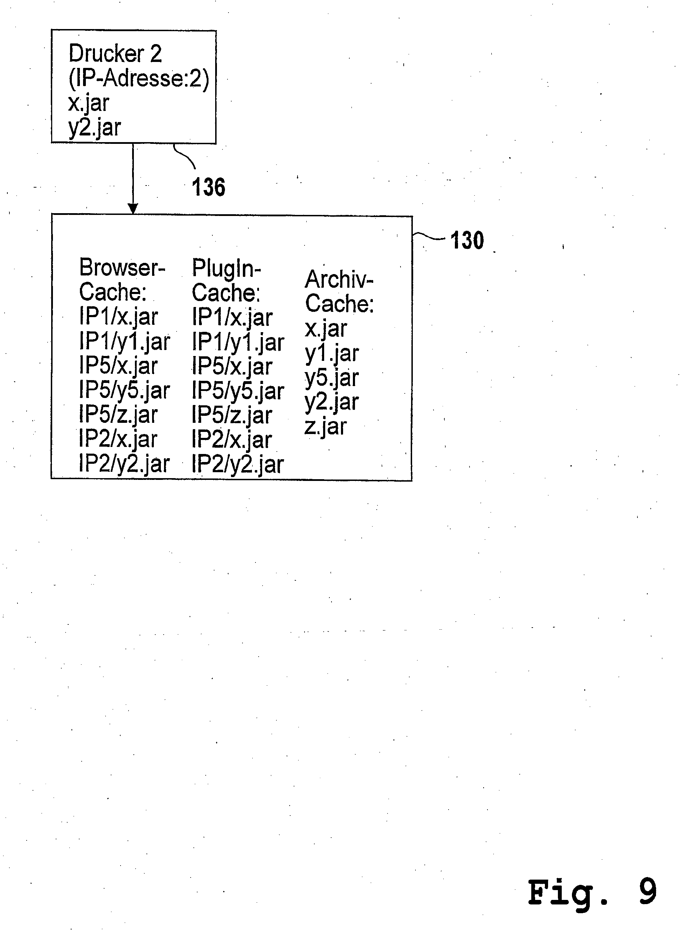

In Figur 9 ist ein Blockschaltbild dargestellt, in dem der Service- und Wartungscomputer 130 nach Figur 8 mit einem zweiten Drucker 136 verbunden ist. Vor dem Verbinden des Service- und Wartungscomputers 130 mit dem zweiten Drucker 136 ist der Service- und Wartungscomputer 130 bereits mit dem ersten und fünften Drucker 132, 134 verbunden worden, wie in Zusammenhang mit Figur 8 bereits erläutert. Mit Hilfe der Verbindung zwischen dem Service- und Wartungscomputer 130 und dem zweiten Drucker 136 werden die Programmmodule "x.jar" und "y2.jar" vom Drucker 136 zum Service- und Wartungscomputer 130 übertragen und unter Bezug auf die IP-Adresse des Druckers 136 im Browser-Zwischenspeicher und im PlugIn-Zwischenspeicher gespeichert. Wird, wie bereits in Zusammenhang mit Figur 8 erläutert, jedoch anstatt das Browser-Zwischenspeichers und des PlugIn-Zwischenspeichers erfindungsgemäß ein Archiv-Zwischenspeicher vorgesehen, in dem die jar-Archive gespeichert werden, so wird vom Drucker 136 nur das im Archiv-Zwischenspeicher nicht enthaltene jar-Archiv "y2.jar" vom Drucker 2 zum Service- und Wartungscomputer 130 übertragen.

Nach dem Verbinden des Service- und Wartungscomputers 130 mit den Druckern 132, 134 und 136 sind im Browser-Zwischenspeicher und im PlugIn-Zwischenspeicher jeweils sieben Dateien mit jar-Archiven gespeichert, die von den Druckern 132, 134, 136 zum Service- und Wartungscomputer 130 übertragen worden sind. Im Archiv-Zwischenspeicher sind nur fünf Dateien zwischengespeichert, da die Dateien "x.jar", die in den Druckern 132, 134, 136 gespeichert sind, übereinstimmen und nicht mehrfach von den Druckern 132, 134, 136 zum Service- und Wartungscomputer 130 übertragen werden müssen.

Je nach Voreinstellung im Browser-Programmmodul werden die im Browser-Zwischenspeicher und im PlugIn-Zwischenspeicher gespeicherten Daten nach einem, vorbestimmten Zeitraum gelöscht. Die im Archiv-Zwischenspeicher enthaltenen Daten und Dateien werden zumindest nicht automatisch gelöscht. Wird nur der Archiv-Zwischenspeicher des Service- und Wartungscomputers 130 zum Speichern der jar-Archive genutzt, so kann die zu übertragende Datenmenge von den Druckern 132, 134, 136 zu dem Service- und Wartungscomputer 130 somit erheblich verringert werden, wodurch Wartezeiten vermieden werden. Durch eine Überprüfung der erforderlichen Versionen der jar-Archive und der im Archiv-Zwischenspeicher gespeicherten Versionen der jar-Archive ist sichergestellt, dass die erforderlichen jar-Archive geladen und anschließend vom Browser-Programmmodul des Service- und Wartungscomputers 130 verarbeitet werden.

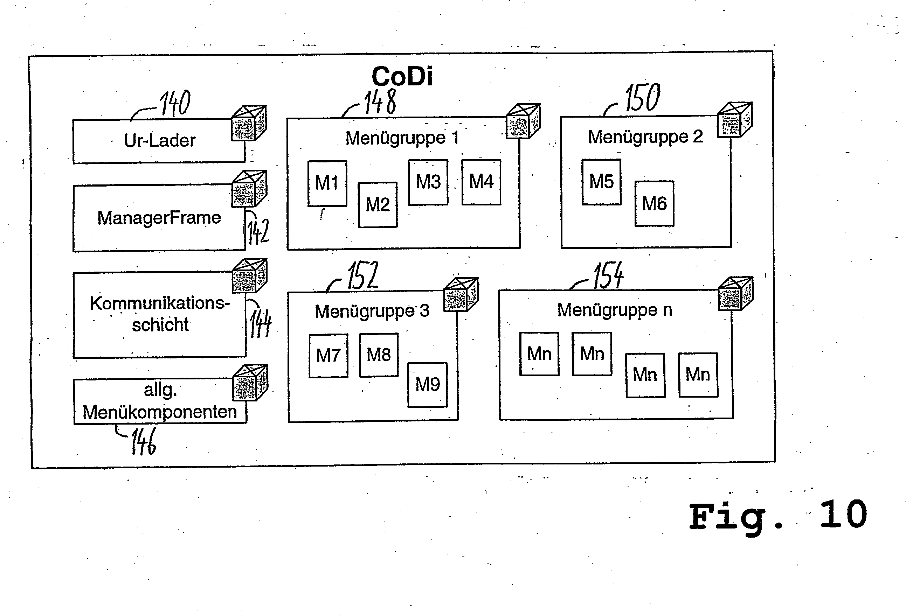

In Figur 10 ist ein Blockschaltbild mit jar-Archiven zum Erzeugen einer grafischen Benutzeroberfläche zur Konfiguration und Diagnose eines elektrofotografischen Druckers dargestellt. Die jar-Archive enthalten, wie bereits erwähnt, Java-Applets und/oder Java-Applikationen sowie zum Abarbeiten von Applets und Applikationen benötigte weitere Programmdaten. Ein erstes jar-Archiv 140 enthält mindestens ein Java-Applet, durch das eine Ur-Lader-Funktion bereitgestellt wird. Ein zweites jar-Archiv 142 enthält zumindest Klassen- oder Programmdaten zum Verwalten von Daten des Druckers im Browser-Programmmodul. Ein drittes jar-Archiv 144 enthält zumindest Klassen- oder Programmdaten zum Bereitstellen von Kommunikationsfunktionen, wodurch eine sogenannte Kommunikationsschicht erzeugt wird. Die von der Kommunikationsschicht benötigten Funktionen werden durch die im jar-Archiv 142 enthaltenen Klassen- oder Programmdaten bereitgestellt.

Weiterhin ist ein jar-Archiv 146 vorgesehen, das zumindest Klassen- oder Programmdaten zum Erzeugen allgemeiner Menükomponenten und der grafischen Strukturierung der grafischen Benutzeroberfläche enthält. Diese allgemeinen Menükomponenten greifen auf Funktionen der Kommunikationsschicht zurück. Weiterhin sind jar-Archive 148, 150, 152 und 154 vorgesehen, die jeweils eine Menügruppe und Funktionen einzelner aufrufbarer Menüpunkte mit Hilfe von Klassen- und Programmdaten bereitstellen. Die Menügruppen 148 bis 154 greifen auf Funktionen der allgemeinen Menükomponenten 146 zurück. Weiterhin greift die Menügruppe 152 auf die Kommunikationsschicht 144 direkt zu. Die Menügruppen 148 bis 154 haben untereinander keine Abhängigkeit.

Nach dem Verbinden des Service- und Wartungscomputers mit dem Drucker wird das jar-Archiv 140 übertragen, das eine relativ geringe Datenmenge enthält. Das jar-Archiv 140 enthält, wie bereits erwähnt, den Ur-Lader und weiterhin druckerspezifische Daten. Die weiteren zum Erzeugen der grafischen Benutzeroberfläche erforderlichen jar-Archive 142 bis 154 werden vorzugsweise aus dem Archiv-Zwischenspeicher 82 geladen. Der Archiv-Zwischenspeicher 82 befindet sich auf einem Festplattenspeicher des Service- und Wartungscomputers. Dadurch können diese Daten sehr schnell zum Browser-Programmmodul übertragen werden.

Anschließend wird das jar-Archiv 142 "ManagerFrame" zum Verwalten von Daten und das jar-Archiv 144 zur Kommunikation sowie zur Authentifizierung geladen. Erst nach erfolgter Authentifizierung werden weitere jar-Archive 146 bis 154 geladen. Beim Erzeugen der allgemeinen Menükomponenten mit Hilfe des jar-Archivs 146 werden Informationen genutzt, die im Drucker gespeichert sind und auf Einstellungen bereits konfigurierter Benutzeroberfläche basieren. Die jar-Archive 148 bis 154 werden erst zum Browser-Programmmodul übertragen, nachdem eine in der jeweiligen Menügruppe enthaltene Funktion über die grafische Benutzeroberfläche angefordert worden ist. Ferner können weitere jar-Archive vom Drucker zum Service- und Wartungscomputer übertragen werden, die aktuell nicht vom Browser-Programmmodul zum Erzeugen der grafischen Benutzeroberfläche erforderlich sind. Vorzugsweise erfolgt dieses Übertragen der Daten zu Zeitpunkten, in denen keine weiteren Daten vom Drucker zum Service- und Wartungscomputer zu übertragen sind. Vorzugsweise werden alle vom Drucker zum Service- und Wartungscomputer übertragenen jar-Archive in dem Archiv-Zwischenspeicher 82 gespeichert, wenn die Archive noch nicht im Archiv-Zwischenspeicher 82 enthalten sind oder nur in einer anderen Programmversion im Archiv-Zwischenspeicher 82 enthalten sind.

Ferner können vom Drucker Daten zum Service- und Wartungscomputer übertragen werden, die Java-Applikationen enthalten, wobei die Abarbeitung dieser Java-Applikationen mit Hilfe einer sogenannten Java-Web-Start-Technologie erfolgt. Bei der Java-Web-Start-Technologie erfolgt eine Ausführung des Java-Applets oder einer Java-Applikation nicht mit Hilfe eines Browser-Programmmoduls sondern durch Abarbeiten einer Java-Network-Launching-Protokoll-Datei. Dadurch wird das vom Web-Server geladene Applet bzw. die geladene Applikation als lokale Applikation auf der Datenverarbeitungsanlage der Bedieneinheit bzw. des Service-Notebooks abgearbeitet. Als Datenleitungen zum Übertragen von Daten werden insbesondere drahtgebundene und drahtlose Datenverbindungen, wie Bluetooth, UMTS und DSL eingesetzt.

Obgleich in den Zeichnungen und in der vorhergehenden Beschreibung bevorzugte Ausführungsbeispiele aufgezeigt und detailliert beschrieben sind, sollte dies als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der beanspruchten Erfindung liegen, geschützt werden sollen.

### Bezugszeichenliste

- 10: System
- 12: Drucker
- 14: Gerätesteuerung
- 16: Ein- und Ausgabesteuerung
- 18: Service- und Wartungscomputer
- 20, 22: Netzwerkanschluss
- 24: Netzwerk
- 26: externe Bedieneinheit
- 28: LAN-Modem
- 30: Telefonnetz
- 32: Anzeigeprogramm
- 34: Java-Runtime-Programmumgebung
- 36: HTTP-Server
- 38, 40: Speicherbereich
- 42, 44, 46, 48: Programmfunktionen
- 50: RMI-Server
- 52, 54: SNMP-Agent
- 56: System
- 58: Drucker
- 60: Bedieneinheit
- 62: Ein- und Ausgabesteuereinheit
- 64: Service- und Wartungscomputer
- 66: Servicetechniker
- 68, 72, 78: Netzwerkverbindung
- 70, 76: LAN-Modem
- 74: Telefonnetz
- 80: Serviceleitstelle
- 82, 98, 100: Zwischenspeicher
- 84: Browser-Programmmodul
- 86: grafische Benutzeroberfläche
- 88: Java-Applet
- 90: Java-Runtime-Programmumgebung
- 92: BootstrapClassloader
- 94: ExtensionsClassloader
- 96: ApplicationClassloader
- 102: Netzwerk zum Drucker
- 104: CustomURLClassloader
- 110: Datenverarbeitungseinheit
- 112: Druckersteuerung
- 114: Web-Server
- 116: Firmware
- 118: Datenspeicher
- 120: Browser-Programmmodul
- 122: Java-Runtime-Programmumgebung
- 124: Datenspeicher
- 126: Java-Applet
- 130: Service- und Wartungscomputer
- 132, 134, 136: Drucker
- 140 bis 154: jar-Archive

## Patentansprüche

1. Verfahren zum Laden von Programmdaten für eine grafische Benutzeroberfläche zum Bedienen und/oder zur Diagnose eines Druckers oder Kopierers,
bei dem in einem ersten Speicherbereich (38) einer Steuereinheit (16) des Druckers (12) oder Kopierers gespeicherte erste Daten mit Hilfe eines von einer Bedieneinheit (18, 26) des Druckers oder Kopierers abgearbeiteten Browser-Programmmoduls von der Steuereinheit (16) zu der Bedieneinheit (18, 26) übertragen werden, wobei die ersten Daten zumindest Angaben über mindestens ein zum Erzeugen von Bedien- und/oder Diagnosefunktionen erforderliches Programmmodul enthalten,
mit Hilfe der Bedieneinheit (18, 26) überprüft wird, ob Programmdaten, die das erforderliche Programmmodul enthalten, in einem Archiv-Zwischenspeicher (86) der Bedieneinheit (18, 26) enthalten sind, in dem Programmdaten unabhängig von der Netzwerkadresse des Druckers oder Kopierers speicherbar und auslesbar sind,
bei nicht vorhandenen Programmdaten mit dem erforderlichen Programmmodul im Archiv-Zwischenspeicher (86) die Programmdaten aus einem weiteren Speicherbereich (40) der Steuereinheit (16) zur Bedieneinheit (18, 26) übertragen und im Archiv-Zwischenspeicher (86) gespeichert werden,
und bei dem Anweisungen des erforderlichen Programmmoduls durch die Bedieneinheit (18, 26) abgearbeitet werden.

2. Verfahren nach Anspruch 1, **dadurch gekennzeichnet, dass** die Bedieneinheit ein mit dem Drucker (12) oder Kopierer über eine Datenverbindung verbundener Service- und Wartungscomputer (18) ist,
und dass mit Hilfe des Service- und Wartungscomputers (18) einer Bedienperson zusätzlich zu Diagnosefunktionen sowie zu dem Ändern von Einstellwerten und Parametern die gleichen Bedienhandlungen ermöglicht werden, wie mit Hilfe einer mit der Steuereinheit (16) verbundenen weiteren Bedieneinheit (26).

3. Verfahren nach Anspruch 1 oder 2, **dadurch gekennzeichnet, dass** eine Bedieneinheit (26) und ein Service- und Wartungscomputer (18) mit derselben Steuereinheit über jeweils eine Datenverbindung verbunden werden.

4. Verfahren nach einem der vorhergehenden Ansprüche, **dadurch gekennzeichnet, dass** die im Archiv-Zwischenspeicher (86) bzw. die im Speicherbereich (86) des Service- und Wartungscomputers (18) gespeicherten Programmdaten unabhängig von den Einstellungen im Browser-Programmmodul nicht automatisch gelöscht werden.

5. Verfahren nach einem der vorhergehenden Ansprüche, **dadurch gekennzeichnet, dass** Programmdaten mehrerer Programmmodule im Speicherbereich (86) des Service- und Wartungscomputers (18) oder im Archiv-Zwischenspeicher (86) der Bedieneinheit (26) enthalten sind, die unabhängig von einer Netzwerkadresse der Steuereinheit (16) vom Service- und Wartungscomputer (18) oder von der Bedieneinheit (26) geladen und abgearbeitet werden.

6. Verfahren nach einem der vorhergehenden Ansprüche, **dadurch gekennzeichnet, dass** der Versionsstand des im Speicherbereich des Service- und Wartungscomputers (18) oder im Archiv-Zwischenspeicher (86) als Programmdaten gespeicherten Programmmoduls vor dem Übertragen der Programmdaten und/oder vor dem Laden der Programmdaten mit dem Versionsstand eines erforderlichen Programmmoduls verglichen wird.

7. Verfahren nach einem der vorhergehenden Ansprüche, **dadurch gekennzeichnet, dass** der Speicherbereich des Service- und Wartungscomputers (18) oder der Archiv-Zwischenspeicher (86) ein Speicherbereich eines Festplattenspeichers und/oder eines austauschbaren Datenträgers ist.

8. Verfahren nach einem der vorhergehenden Ansprüche, **dadurch gekennzeichnet, dass** die ersten Daten zumindest den Druckertyp und/oder den Ausgabestand des Druckers (12) oder Kopierers enthalten.

9. Verfahren nach einem der vorhergehenden Ansprüche, **dadurch gekennzeichnet, dass** im Speicherbereich des Service- und Wartungscomputers (18) oder im Archiv-Zwischenspeicher (86) Programmdaten mehrerer Programmmodule gespeichert sind, wobei mit Hilfe der ersten Daten ein Programmmodul ausgewählt wird.

10. Verfahren nach einem der vorhergehenden Ansprüche, **dadurch gekennzeichnet, dass** die ersten Daten ein Programmmodul enthalten, bei dessen Abarbeitung weitere erste Daten und zweite Daten geladen werden, wobei die ersten Daten ein Programmmodul zur Authentifizierung, ein Programmmodul zur Kommunikationssteuerung zwischen der Steuereinheit (16) und der Bedieneinheit (26) oder zwischen der Steuereinheit (16) und dem Service- und Wartungscomputers (18), ein Programmmodul zum Bereitstellen von Bedien- und/oder Diagnösefunktionen enthalten, wobei die ersten Daten in mindestens einer Datei enthalten sind.

11. Verfahren nach Anspruch 10, **dadurch gekennzeichnet, dass** die ersten Daten und/oder Prögrammdaten ein Java-Applet oder ein ActiveX-Programmelement enthalten.

12. Verfahren nach einem der vorhergehenden Ansprüche, **dadurch gekennzeichnet, dass** die Steuereinheit (16) über eine Datenfernübertragungs-Verbindung (28, 30) mit dem Service- und Wartungscomputer (18) verbunden ist.

13. Verfahren nach Anspruch 12, **dadurch gekennzeichnet, dass** die Datenfernübertragungs-Verbindung eine Punkt-zu-Punkt-Verbindung, insbesondere eine ISDN-Datenverbindung, eine Verbindung mit Hilfe eines Local Area Networks oder eine Verbindung mit Hilfe eines Wide Area Networks ist.

14. Verfahren nach einem der vorhergehenden Ansprüche, **dadurch gekennzeichnet, dass** die ersten Daten und/oder die Programmdaten ein Ur-Lader-Programm, druckerspezifische Informationen, Programmmodule für eine RMI-Kommunikation, Programmmodule zum Durchführen einer Authentifizierung, Programmmodule zum Erzeugen einer grafischen Benutzeroberfläche, Programmmodule zum Zugriff auf eine Datenbasis des Druckers oder Kopierers, Programmmodule zur Diagnose einer Papiereingabeeinheit, einer Papierlaufsteuerung, einer Papierausgabeeinheit oder einer Druckeinheit, Programmmodule zum Zugriff auf eine Ereignisregistrierung und/oder Programmmodule zum Zugriff auf einen Fehlerspeicher enthalten.

15. Verfahren nach einem der vorhergehenden Ansprüche, **dadurch gekennzeichnet, dass** die ersten Daten und/oder die Programmdaten Java-Applikationen enthalten, die mit Hilfe einer Java-Web-Start-Technologie zur Bedieneinheit (18, 26) übertragen und durch diese abgearbeitet werden.

16. Verfahren nach einem der vorhergehenden Ansprüche, **dadurch gekennzeichnet, dass** die Programmdaten Programmelemente zum Einstellen von Parametern, Zählerwerten, Zählergrenzwerten, einzustellenden Spannungswerten, Statusinformationen sowie zum Durchführen von Lichtschrankentestroutinen, Motortestroutinen und Ventiltestroutinen enthalten.

17. System zum Bedienen und/oder zur Diagnose eines Druckers oder Kopierers mit Hilfe einer grafischen Benutzeroberfläche,
mit einer Bedieneinheit (18, 26) die mit einer Steuereinheit (16) des Druckers (12) oder Kopierers über eine Datenleitung verbindbar ist,
bei dem die Bedieneinheit (18, 26) ein Browser-Programmmodul abarbeitet, mit dessen Hilfe in einem ersten Speicherbereich der Steuereinheit (16) gespeicherte erste Daten von der Steuereinheit (16) zur Bedieneinheit (18, 26) übertragbar sind, die zumindest Angaben über mindestens ein zum Erzeugen von Bedien- und/oder Diagnosefunktionen erforderliches Programmmodul enthalten,
die Bedieneinheit (18, 26) überprüft, ob Programmdaten, die das erforderliche Programmmodul enthalten, in einem Archiv-Zwischenspeicher (86) der Bedieneinheit (18, 26) enthalten sind, in dem Programmdaten unabhängig von der Netzwerkadresse des Druckers oder Kopierers speicherbar und auslesbar sind, wobei die im Archiv-Zwischenspeicher (86) gespeicherten Programmdaten unabhängig von den Einstellungen im Browser-Programmmodul nicht automatisch löschbar sind, bei nicht vorhandenen Programmdaten mit dem, erforderlichen Programmmodul im Archiv-Zwischenspeicher (86) die Programmdaten von einem weiteren Speicherbereich der Steuereinheit (16) zur Bedieneinheit (18, 26) übertragbar und im Archiv-Zwischenspeicher (86) speicherbar sind,
und bei dem die Bedieneinheit (18, 26) Anweisungen des erforderlichen Programmmoduls ausführt.

18. System nach Anspruch 17, **dadurch gekennzeichnet, dass** die Bedieneinheit ein mit dem Drucker (12) oder Kopierer über eine Datenverbindung verbundener Service- und Wartungscomputer (18) ist, und dass der Service- und Wartungscomputer (18) einer Bedienperson zusätzlich zu Diagnosefunktionen sowie zu dem Ändern von Einstell-werten und Parametern die gleichen Bedienhandlungen ermöglicht, wie mit Hilfe einer mit der Steuereinheit (16) verbundenen weiteren Bedieneinheit (26).

## Claims

1. A method for loading program data for a graphical user interface for operation and/or for diagnosis of a printer or copier,
in which first data stored in a first memory area (38) of a control unit (16) of the printer (12) or copier are transferred by means of a browser program module executed by an operating unit (18, 26) of the printer or copier from the control unit (16) to the operating unit (18, 26), wherein the first data contain at least specifications about at least one program module necessary for generation of operating and/or diagnosis functions,
by means of the operating unit (18, 26), it is checked whether program data that contain the necessary program module are contained in an archive intermediate memory (86) of the operating unit (18, 26), in which program data can be stored and read out independent of the network address of the printer or copier,
in the case of non-existent program data with the necessary program module in the archive intermediate memory (86), the program data are transferred from a further memory area (40) of the control unit (16) to the operating unit (18, 26) and are stored in the archive intermediate memory (86),
and in which instructions of the necessary program module are executed by the operating unit (18, 26).

2. The method according to claim 1, **characterized in that** the operating unit is a service and maintenance computer (18) connected to the printer (12) or copier via a data connection,
and that by means of the service and maintenance computer (18), in addition to diagnosis functions as well as to the modification of setting values and parameters, an operator is enabled to perform the same operator control actions as by means of a further operating unit (26) connected to the control unit (16).

3. The method according to claim 1 or 2, **characterized in that** an operating unit (26) and a service and maintenance computer (18) are connected to the same control unit via one data connection each.

4. The method according to one of the preceding claims, **characterized in that** the program data stored in the archive intermediate memory (86) or in the memory area (86) of the service and maintenance computer (18) are not automatically deleted independent of the settings in the browser program module.

5. The method according to one of the preceding claims, **characterized in that** program data of several program modules are contained in the memory area (86) of the service and maintenance computer (18) or in the archive intermediate memory (86) of the operating unit (26), which are loaded and executed independent of a network address of the control unit (16) by the service and maintenance computer (18) or by the operating unit (26).

6. The method according to one of the preceding claims, **characterized in that** the version number of the program module stored in the memory area of the service and maintenance computer (18) or in the archive intermediate memory (86) as program data is compared to the version number of a necessary program module before transferring the program data and/or before loading the program data.

7. The method according to one of the preceding claims, **characterized in that** the memory area of the service and maintenance computer (18) or the archive intermediate memory (86) is a memory area of a hard-disk memory and/or an exchangeable data medium.

8. The method according to one of the preceding claims, **characterized in that** the first data contain at least the printer type and/or the version number of the printer (12) or copier.

9. The method according to one of the preceding claims, **characterized in that** in the memory area of the service and maintenance computer (18) or in the archive intermediate memory (86) program data of several program modules are stored, a program module being selected by means of the first data.

10. The method according to one of the preceding claims, **characterized in that** the first data contain a program module, upon execution of which further first data and second data are loaded, wherein the first data contain a program module for authentication, a program module for communication control between the control unit (16) and the operating unit (26) or between the control unit (16) and the service and maintenance computer (18), a program module for provision of operating and/or diagnosis functions, the first data being contained in at least one data file.

11. The method according to claim 10, **characterized in that** the first data and/or program data contain a Java applet or an ActiveX program element.

12. The method according to one of the preceding claims, **characterized in that** the control unit (16) is connected to the service and maintenance computer (18) via a remote data transfer connection (28, 30).

13. The method according to claim 12, **characterized in that** the remote data transfer connection is a point-to-point connection, in particular an ISDN data connection, a connection with the aid of a local area network or a connection with the aid of a wide area network.

14. The method according to one of the preceding claims, **characterized in that** the first data and/or the program data contain a primary loader program, printer-specific information, program modules for an RMI communication, program modules for implementation of an authentication, program modules for generation of a graphical user interface, program modules for access to a database of the printer or copier, program modules for diagnosis of a paper input unit, a paper path controller, a paper output unit or a printing unit, program modules for access to an event registration and/or program modules for access to an error memory.

15. The method according to one of the preceding claims, **characterized in that** the first data and/or the program data contain Java applications that are transferred with the aid of a Java Web Start technology to the operating unit (18, 26) and executed thereby.

16. The method according to one of the preceding claims, **characterized in that** the program data contain program elements for the adjustment of parameters, counter values, counter limit values, voltage levels to be set, status information as well as program elements for the implementation of light barrier test routines, motor test routines and valve test routines.

17. A system for operating and/or for diagnosis of a printer or copier by means of a graphical user interface,
comprising an operating unit (18, 26) which is connectable to a control unit (16) of the printer (12) or copier via a data line,
in which the operating unit (18, 26) executes a browser program module by means of which first data stored in a first memory area of the control unit (16) are transferrable from the control unit (16) to the operating unit (18, 26), which contain at least specifications about at least one program module necessary for generating operating and/or diagnosis functions,
the operating unit (18, 26) checks whether program data that contain the necessary program module are contained in an archive intermediate memory (86) of the operating unit (18, 26) in which program data can be stored and read out independent of the network address of the printer or copier, wherein the program data stored in the archive intermediate memory (86) are not automatically deletable independent of the settings in the browser program module,
in the case of non-existent program data with the necessary program module in the archive intermediate memory (86), the program data are transferrable from a further memory area of the control unit (16) to the operating unit (18, 26) and are storable in the archive intermediate memory (86),
and in which the operating unit (18, 26) executes instructions of the necessary program module.

18. The system according to claim 17, **characterized in that** the operating unit is a service and maintenance computer (18) connected via a data connection to the printer (12) or copier and that by means of the service and maintenance computer (18) an operator is enabled, in addition to diagnosis functions as well as to the modification of settings and parameters, to perform the same operator control actions as by means of a further operating unit (26) connected to the control unit (16).

## Revendications

1. Procédé pour charger des données de programme pour une interface utilisateur graphique en vue de commander et/ou de diagnostiquer une imprimante ou un copieur,
selon lequel des premières données mises en mémoire dans une première zone de mémoire (38) d'une unité de contrôle (16) de l'imprimante (12) ou du copieur sont transmises à l'aide d'un module de programme navigateur exécuté par une unité de commande (18, 26) de l'imprimante ou du copieur depuis l'unité de contrôle (16) vers l'unité de commande (18, 26), les premières données contenant au moins des indications sur au moins un module de programme nécessaire pour générer des fonctions de commande et/ou de diagnostic,
un contrôle étant effectué à l'aide de l'unité de commande (18, 26) afin de vérifier si les données de programme qui contiennent le module de programme nécessaire sont contenues dans une mémoire temporaire d'archivage (86) de l'unité de commande (18, 26), dans laquelle les données de programme peuvent être mises en mémoire et depuis laquelle elles peuvent être lues indépendamment de l'adresse de réseau de l'imprimante ou du copieur,
si des données de programme contenant le module de programme nécessaire ne sont pas présentes dans la mémoire temporaire d'archivage (86), les données de programme étant transmises depuis une autre zone de mémoire (40) de l'unité de contrôle (16) vers l'unité de commande (18, 26) et étant mises en mémoire dans la mémoire temporaire d'archivage (86),
et procédé selon lequel les instructions du module de programme nécessaire sont exécutées par l'unité de commande (18, 26).

2. Procédé selon la revendication 1, **caractérisé en ce que** l'unité de commande est un ordinateur de service et de maintenance (18) relié à l'imprimante (12) ou au copieur par le biais d'une liaison de données,
et **en ce qu'**à l'aide de l'ordinateur de service et de maintenance (18), en plus des fonctions de diagnostic et de la modification des valeurs de réglage et des paramètres, un opérateur peut effectuer les mêmes actions de commande qu'à l'aide d'une unité de commande supplémentaire (26) reliée avec l'unité de contrôle (16).

3. Procédé selon la revendication 1 ou 2, **caractérisé en ce qu'**une unité de commande (26) et un ordinateur de service et de maintenance (18) sont reliés à la même unité de contrôle respectivement par le biais d'une liaison de données.

4. Procédé selon l'une des revendications précédentes, **caractérisé en ce que** les données de programme mises en mémoire dans la mémoire temporaire d'archivage (86) ou dans la zone de mémoire (86) de l'ordinateur de service et de maintenance (18) ne sont pas effacées automatiquement, indépendamment des réglages dans le module de programme navigateur.

5. Procédé selon l'une des revendications précédentes, **caractérisé en ce que** les données de programme de plusieurs modules de programme sont contenues dans la zone de mémoire (86) de l'ordinateur de service et de maintenance (18) ou dans la mémoire temporaire d'archivage (86) de l'unité de commande (26), lesquelles sont chargées et traitées indépendamment d'une adresse de réseau de l'unité de contrôle (16) par l'ordinateur de service et de maintenance (18) ou par l'unité de commande (26).

6. Procédé selon l'une des revendications précédentes, **caractérisé en ce que** le numéro de version du module de programme mis en mémoire sous la forme de données de programme dans la zone de mémoire de l'ordinateur de service et de maintenance (18) ou dans la mémoire temporaire d'archivage (86) est comparé avec le numéro de version d'un module de programme nécessaire avant la transmission des données de programme et/ou avant le chargement des données de programme.

7. Procédé selon l'une des revendications précédentes, **caractérisé en ce que** la zone de mémoire de l'ordinateur de service et de maintenance (18) ou la mémoire temporaire d'archivage (86) est une zone de mémoire d'un disque de dur et/ou d'un support de données amovible.

8. Procédé selon l'une des revendications précédentes, **caractérisé en ce que** les premières données contiennent au moins le modèle d'imprimante et/ou le numéro d'édition de l'imprimante (12) ou du copieur.

9. Procédé selon l'une des revendications précédentes, **caractérisé en ce que** les données de programme de plusieurs modules de programme sont mises en mémoire dans la zone de mémoire de l'ordinateur de service et de maintenance (18) ou dans la mémoire temporaire d'archivage (86), un module de programme étant sélectionné à l'aide des premières données.

10. Procédé selon l'une des revendications précédentes, **caractérisé en ce que** les premières données contiennent un module de programme lors du traitement duquel sont chargées des premières données supplémentaires ainsi que des deuxièmes données, les premières données contenant un module de programme servant à l'authentification, un module de programme servant au contrôle des communications entre l'unité de contrôle (16) et l'unité de commande (26) ou entre l'unité de contrôle (16) et l'ordinateur de service et de maintenance (18), un module de programme servant à la mise à disposition de fonctions de commande et/ou de diagnostic, les premières données étant contenues dans au moins un fichier.

11. Procédé selon la revendication 10, **caractérisé en ce que** les premières données et/ou les données de programme contiennent une applet Java ou un élément de programme ActiveX.

12. Procédé selon l'une des revendications précédentes, **caractérisé en ce que** l'unité de contrôle (16) est reliée à l'ordinateur de service et de maintenance (18) par le biais d'une liaison de transmission de données (28, 30).

13. Procédé selon la revendication 12, **caractérisé en ce que** la liaison de transmission de données est une liaison point à point, notamment une liaison de données RNIS, une liaison à l'aide d'un réseau local ou une liaison à l'aide d'un réseau de zone étendue.

14. Procédé selon l'une des revendications précédentes, **caractérisé en ce que** les premières données et/ou les données de programme contiennent un programme chargeur original, des informations spécifiques à l'imprimante, des modules de programme pour une communication RMI, des modules de programme servant à effectuer une authentification, des modules de programme servant à générer une interface utilisateur graphique, des modules de programme servant à accéder à une base de données de l'imprimante ou du copieur, des modules de programme servant au diagnostic d'une unité d'introduction de papier, d'un contrôle de défilement de papier, d'une unité de sortie de papier ou d'une unité d'impression, des modules de programme servant à accéder à un journal des événements et/ou des modules de programme servant à accéder à une mémoire des défauts.

15. Procédé selon l'une des revendications précédentes, **caractérisé en ce que** les premières données et/ou les données de programme contiennent des applications Java qui sont transmises à l'unité de commande (18, 26) et sont exécutées par celle-ci à l'aide d'une technologie Java-Web-Start.

16. Procédé selon l'une des revendications précédentes, **caractérisé en ce que** les données de programme contiennent des éléments de programme servant au réglage de paramètres, de valeurs de compteur, de valeurs limites de compteur, de valeurs de tension à régler, d'informations d'état et servant aussi à exécuter des routines de test de barrière photoélectrique, des routines de test de moteur et des routines de test de vannes.

17. Système pour commander et/ou diagnostiquer une imprimante ou un copieur à l'aide d'une interface utilisateur graphique,
comprenant une unité de commande (18, 26) qui peut être reliée avec une unité de contrôle (16) de l'imprimante (12) ou du copieur par le biais d'une ligne de données, avec lequel l'unité de commande (18, 26) exécute un module de programme navigateur à l'aide duquel des premières données mises en mémoire dans une première zone de mémoire de l'unité de contrôle (16) peuvent être transmises de l'unité de contrôle (16) vers l'unité de commande (18, 26), lesquelles contiennent au moins des indications sur au moins un module de programme nécessaire pour générer des fonctions de commande et/ou de diagnostic,
l'unité de commande (18, 26) vérifie si les données de programme qui contiennent le module de programme nécessaire sont contenues dans une mémoire temporaire d'archivage (86) de l'unité de commande (18, 26), dans laquelle les données de programme peuvent être mises en mémoire et depuis laquelle elles peuvent être lues indépendamment de l'adresse de réseau de l'imprimante ou du copieur, les données de programme mises en mémoire dans la mémoire temporaire d'archivage (86) ne pouvant pas être effacées automatiquement, indépendamment des réglages dans le module de programme navigateur,
si des données de programme contenant le module de programme nécessaire ne sont pas présentes dans la mémoire temporaire d'archivage (86), les données de programme pouvant être transmises depuis une autre zone de mémoire de l'unité de contrôle (16) vers l'unité de commande (18, 26) et pouvant être mises en mémoire dans la mémoire temporaire d'archivage (86),
et système avec lequel l'unité de commande (18, 26) exécute les instructions du module de programme nécessaire.

18. Système selon la revendication 17, **caractérisé en ce que** l'unité de commande est un ordinateur de service et de maintenance (18) relié à l'imprimante (12) ou au copieur par le biais d'une liaison de données, et **en ce qu'**à l'aide de l'ordinateur de service et de maintenance (18), en plus des fonctions de diagnostic et de la modification des valeurs de réglage et des paramètres, un opérateur peut effectuer les mêmes actions de commande qu'à l'aide d'une unité de commande supplémentaire (26) reliée avec l'unité de contrôle (16).
